# EUROPÄISCHE PATENTSCHRIFT

(11) **EP 4 471 397 B1**
(45) Veröffentlichungstag und Bekanntmachung des Hinweises auf die Patenterteilung: **26.08.2026**
(21) Anmeldenummer: 24170592.0
(22) Anmeldetag: 16.04.2024
(51) Int. Cl.: G01M 3/00, G01M 3/24, G01M 3/38, G01M 5/00, B62D 57/024, F17D 5/00, B25J 11/00, F16L 55/00

(54) **INSPEKTIONSVORRICHTUNG ZUR INSPEKTION VON ROHRLEITUNGEN**
INSPECTION DEVICE FOR INSPECTING PIPES
DISPOSITIF D'INSPECTION POUR L'INSPECTION DE CANALISATIONS

(30) Priorität: 31.05.2023 DE 102023114315
(43) Veröffentlichungstag der Anmeldung: 04.12.2024
(73) Patentinhaber: Westnetz GmbH, 44139 Dortmund (DE)
(72) Erfinder: Penczek, Torben, 45772 Marl (DE)
(74) Vertreter: Bals & Vogel Patentanwälte PartGmbB

(56) Entgegenhaltungen:
- CN-A- 110 104 085
- CN-A- 110 803 233
- RU-C1- 2 452 889
- US-A1- 2021 389 257
- US-A1- 2021 396 842

## Beschreibung

Die Erfindung betrifft eine Inspektionsvorrichtung mit den Merkmalen des unabhängigen Patentanspruchs 1, ein Inspektionssystem mit den Merkmalen des unabhängigen Patentanspruchs 12, ein Verfahren mit den Merkmalen des unabhängigen Patentanspruchs 13, ein Computerprogrammprodukt mit den Merkmalen des unabhängigen Patentanspruchs 14 sowie ein computerlesbares Speichermedium mit den Merkmalen des unabhängigen Patentanspruchs 15.

Rohrleitungen, insbesondere Gasleitungen, sind in ihrem Betrieb hohen Belastungen ausgesetzt und weisen daher einen betriebsbedingten Verschleiß auf. Im Inneren der Rohrleitungen können hohe Drücke anliegen. Ferner sind die Rohrleitungen oft äußeren Einflüssen ausgesetzt, welche einen alterungsbedingten Verschleiß begünstigen können. Um eine fehlerfreie Funktion von Rohrleitungen, insbesondere Gasleitungen sicherzustellen, bedürfen diese einer regelmäßigen Inspizierung. Auf Grundlage der Inspizierung kann festgestellt werden, ob Reparaturmaßnahmen und/oder Erneuerungsmaßnahmen an der Rohrleitung bzw. dem betreffenden Rohrleitungsabschnitt erforderlich sind oder ob ein fehlerfreier Betrieb der Rohrleitung nach wie vor gewährleistet werden kann.

In Bezug auf die Inspektion von Rohrleitungen ergibt sich die Problematik, dass diese teils an schwer zugänglichen Bereichen wie bspw. an Brückenkörpern angeordnet sind. Der Einsatz von Drohnen ist in diesem Zusammenhang oft nicht ausreichend, da die Rohrleitungen von der Drohne oft nicht von allen Seiten angeflogen und optisch untersucht werden können. Ferner kann der Einsatz von Drohnen, insbesondere im Bereich von Brücken, durch äußere Einflüsse wie Wind und Regen erschwert werden, sodass eine Inspektion von Rohrleitungen lediglich in Abhängigkeit der aktuellen Witterungsbedingungen durchführbar ist. Auch kann mit einer Drohne oft eine lediglich beschränkte Sensorik zur Inspektion der Rohrleitung mitgeführt werden.

Aus der Druckschrift CN 110 803 233 A ist ein computergesteuerter Kriechroboter zur Anwendung in Rohrleitungen bekannt. Die Druckschrift CN 110 104 085 A offenbart einen Kletterroboter für die Inspektion von Rohrleitungen und die Druckschrift RU 2 452 889 C1 zeigt eine Kontrollvorrichtung zur Überprüfung von Schweißverbindungen innerhalb von Rohrleitungen.

Es ist daher eine Aufgabe der vorliegenden Erfindung, wenigstens einen der voranstehend beschriebenen Nachteile zumindest teilweise zu überwinden. Insbesondere ist es Aufgabe der Erfindung eine Inspektionsvorrichtung zur Inspektion wenigstens einer Rohrleitung, ein Inspektionssystem zur Inspektion einer Rohrleitung sowie ein Verfahren zur Inspektion einer Rohrleitung bereitzustellen, wodurch eine möglichst einfache und/oder zuverlässige Inspektion wenigstens einer Rohrleitung durchführbar ist. Insbesondere ist es eine Aufgabe der Erfindung, eine zuverlässige Bewegbarkeit der Inspektionsvorrichtung entlang und/oder auf wenigstens einer Rohrleitung sowie eine gleichzeitig zuverlässige Inspektion der Rohrleitung zu ermöglichen.

Die voranstehende Aufgabe wird gelöst durch eine Inspektionsvorrichtung mit den Merkmalen des unabhängigen Patentanspruchs 1, durch ein Inspektionssystem mit den Merkmalen des unabhängigen Patentanspruchs 12, durch ein Verfahren mit den Merkmalen des unabhängigen Patentanspruchs 13, durch ein Computerprogrammprodukt mit den Merkmalen des unabhängigen Patentanspruchs 14 sowie durch ein computerlesbares Speichermedium mit den Merkmalen des unabhängigen Patentanspruchs 15. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Inspektionsvorrichtung beschrieben sind, selbstverständlich auch im Zusammenhang mit dem erfindungsgemäßen Inspektionssystem und/oder im Zusammenhang mit dem erfindungsgemäßen Verfahren und/oder im Zusammenhang mit dem erfindungsgemäßen Computerprogrammprodukt und/oder im Zusammenhang mit dem erfindungsgemäßen computerlesbaren Speichermedium und jeweils umgekehrt, so dass bezüglich der Offenbarung zu den einzelnen Erfindungsaspekten stets wechselseitig Bezug genommen wird bzw. werden kann.

Erfindungsgemäß vorgesehen ist eine Inspektionsvorrichtung zur Inspektion wenigstens einer Rohrleitung, umfassend wenigstens eine oder genau eine Basiseinheit sowie wenigstens eine oder genau eine Inspektionseinheit, wobei die Inspektionseinheit wenigstens ein Sensorelement zur Inspektion der Rohrleitung umfasst. Ferner umfasst die Basiseinheit wenigstens eine oder genau eine Antriebseinheit. Die Antriebseinheit umfasst wenigstens ein oder genau ein Antriebsrad sowie wenigstens einen oder genau einen, insbesondere elektrischen, Antrieb, wobei der Antrieb derart mit dem Antriebsrad in Wirkverbindung steht, dass das Antriebsrad durch den Antrieb antreibbar ist. Die Basiseinheit umfasst ferner wenigstens ein oder genau ein Trägerelement sowie wenigstens ein Führungsrad zur Führung der Inspektionsvorrichtung entlang und/oder auf einer Rohrleitung. Die Inspektionseinheit wird zumindest teilweise, insbesondere vollständig, durch das Trägerelement getragen. In anderen Worten ist die Inspektionseinheit an dem Trägerelement angeordnet bzw. zumindest abschnittsweise mit diesem verbunden. Ferner ist wenigstens ein bzw. das Führungsrad an dem Trägerelement angeordnet, wobei eine Rotationsachse wenigstens eines Antriebsrads bzw. des Antriebsrads zu einer Rotationsachse wenigstens eines Führungsrads bzw. des Führungsrads geneigt orientiert ist.

In anderen Worten ist erfindungsgemäß eine Inspektionsvorrichtung zur Inspektion wenigstes einer Rohrleitung vorgesehen. Die Inspektionsvorrichtung umfasst eine Basiseinheit sowie eine Inspektionseinheit. Die Inspektionseinheit umfasst ferner wenigstens ein Sensorelement zur Durchführung einer Inspektion der Rohrleitung. Die Basiseinheit umfasst wenigstens eine Antriebseinheit, wobei die Antriebseinheit wenigstens ein Antriebsrad sowie wenigstens einen, insbesondere elektrischen, Antrieb zum Antrieb des Antriebsrads umfasst. Ferner umfasst die Basiseinheit wenigstens ein Trägerelement sowie wenigstens ein Führungsrad zur Führung der Inspektionsvorrichtung entlang und/oder auf der Rohrleitung. Wenigstens ein Führungsrad ist an dem Trägerelement angeordnet bzw. zumindest abschnittsweise mit diesem verbunden. Ferner ist die Inspektionseinheit der Inspektionsvorrichtung zumindest teilweise, insbesondere vollständig, auf dem Trägerelement angeordnet bzw. wird durch dieses getragen. Weiterhin ist vorgesehen, dass die Rotationsachse des Antriebsrads zu der Rotationsachse wenigstens eines Führungsrads geneigt orientiert ist.

Durch die vorgeschlagene Inspektionsvorrichtung ergibt sich der Vorteil, dass durch die Inspektionseinheit einerseits eine zuverlässige Inspektion der Rohrleitung durchführbar ist und durch die Basiseinheit andererseits eine sichere und zuverlässige Fortbewegung der Inspektionsvorrichtung entlang und/oder auf der Rohrleitung realisierbar ist. Insbesondere durch die Kombination wenigstens eines Antriebsrads und wenigstens eines Führungsrads sowie der Neigung des Antriebsrads zu wenigstens einem Führungsrad ergibt sich eine flexible und sichere Positionierung der Inspektionsvorrichtung auf wenigstens einer Rohrleitung sowie gleichzeitig eine zuverlässige Abstützung der Inspektionsvorrichtung auf wenigstens einer weiteren Oberfläche, sowie ein zuverlässiger Antrieb der Inspektionsvorrichtung.

Es kann im Rahmen der Erfindung vorgesehen sein, dass die Inspektionsvorrichtung dazu ausgebildet ist sich zumindest abschnittsweise auf und/oder entlang einer Rohrleitung zu bewegen. Dabei kann die Bewegung der Inspektionsvorrichtung vorzugsweise entlang einer Längserstreckung bzw. Mittelachse der Rohrleitung erfolgen.

Es kann im Rahmen der Erfindung vorgesehen sein, dass die Basiseinheit dazu vorgesehen bzw. ausgebildet ist eine Fortbewegung der Inspektionsvorrichtung entlang und/oder auf wenigstens einer Rohrleitung durchzuführen. Zusätzlich oder alternativ ist es denkbar, dass die Inspektionseinheit dazu ausgebildet ist eine Inspektion wenigstens einer Rohrleitung, insbesondere unter Verwendung wenigstens eines Sensorelements, durchzuführen.

Es kann im Rahmen der Erfindung ferner vorgesehen sein, dass die Neigung zwischen der Rotationsachse wenigstens eines Antriebsrads und der Rotationsachse wenigstens eines Führungsrads zwischen 10° und 90°, insbesondere zwischen 20° und 90°, bevorzugt zwischen 30° und 90° oder zwischen als 40° und 90° beträgt.

Es kann ferner vorgesehen sein, dass die Antriebseinheit mehr als ein Antriebsrad, insbesondere wenigstens zwei oder mehr als zwei Antriebsräder umfasst. Auch kann vorgesehen sein, dass die Antriebseinheit mehr als einen Antrieb umfasst. Insbesondere kann wenigstens zwei Antriebsrädern jeweils wenigstens ein Antrieb zugeordnet sein.

Zusätzlich oder alternativ ist denkbar, dass mehr als ein Führungsrad umfasst ist, insbesondere wenigstens zwei oder genau zwei, vorzugsweise wenigstens vier oder genau vier, Führungsräder umfasst sind. Es kann ferner vorgesehen sein, dass wenigstens zwei, insbesondere alle, Führungsräder an dem Trägerelement angeordnet sind.

Ein Antriebsrad soll vorliegend als ein Rad verstanden werden, durch welches ein Vortrieb der Inspektionsvorrichtung erzeugbar ist. Insbesondere steht das Antriebsrad hierzu in Wirkverbindung mit wenigstens einem, insbesondere elektrischen, Antrieb, sodass ein Drehmoment von dem Antrieb auf das Antriebsrad übertragbar ist bzw. das Antriebsrad durch den Antrieb antreibbar ist. Es ist im Rahmen der Erfindung denkbar, dass wenigstens ein Antrieb als ein elektrischer Antrieb, insbesondere als ein Elektromotor, ausgebildet ist. Ein Führungsrad soll vorliegend als ein Rad verstanden werden, welches zur Führung der Inspektionsvorrichtung entlang und/oder auf wenigstens einer Rohrleitung ausgebildet ist. Das Führungsrad wird vorzugsweise nicht aktiv, insbesondere durch einen Antrieb, angetrieben. In anderen Worten ergibt sich eine Bewegung eines Führungsrads vorzugsweise lediglich aus einem Abrollen des Führungsrads auf einer Oberfläche, insbesondere auf einem Rohr, wenn die Inspektionsvorrichtung durch die Antriebseinheit in Bewegung versetzt wird.

Es kann vorgesehen sein, dass bei wenigstens einem Antriebsrad der Antrieb in das Antriebsrad integriert ist bzw. eine Radnabe des Antriebsrads ausbildet. Insbesondere ist denkbar, dass der Antrieb als ein Radnabenantrieb bzw. Radnabenmotor ausgebildet ist. Hierdurch ergibt sich eine besonders kompakte Bauform der Antriebseinheit. Ferner wird durch eine solche integrierte Bauform von Antriebsrad und Antrieb eine Bewegbarkeit der Antriebseinheit relativ zu dem Trägerelement konstruktiv vereinfacht.

Wenigstens ein Antriebsrad kann vorzugsweise einen Reifen umfassen, wobei insbesondere der Reifen dazu bestimmt ist auf einer Oberfläche, insbesondere einer Rohrleitung und/oder Wandfläche, zumindest abschnittsweise zum Aufliegen zu kommen. Der Reifen kann profiliert sein. Hierdurch kann die Traktion des Reifens auf der Oberfläche verbessert werden, insbesondere wenn die Oberfläche glatt und/oder nass ist. Hierdurch kann ein Durchdrehen des Antriebsrads verhindert und ein zuverlässiger Antrieb der Inspektionsvorrichtung gewährleistet werden. Auch eine profilfreie Ausbildung wenigstens eines Reifens ist denkbar. Profilfreie Reifen haben sich als besonders vorteilhaft in Bezug eine Verwendung auf trockenen Oberflächen gezeigt.

Zusätzlich oder alternativ kann vorgesehen sein, dass wenigstens ein Antriebsrad Teil eines Raupenantriebs bzw. Kettenfahrwerks ist. In anderen Worten kann vorgesehen sein, dass die Antriebseinheit einen Raupenantrieb umfasst, der Raupenantrieb umfassend wenigstens ein Antriebsrad, wenigstens eine Gleiskette, wenigstens ein Führungsrad zur Führung der Gleiskette sowie wenigstens eine oder mehrere Laufrollen. Durch die Verwendung eines Raupenantriebs ergibt sich eine besonders gute Traktion und ein entsprechend zuverlässiger Antrieb der Inspektionsvorrichtung.

Es kann ferner im Rahmen der Erfindung vorgesehen sein, dass wenigstens einem Antriebsrad und wenigstens einem mit dem Antriebsrad in Wirkverbindung stehenden Antrieb ein Getriebe zwischengeschaltet ist. So kann eine Drehzahl-/Drehmomentwandlung erfolgen. Es kann bspw. eine Ausgangsdrehzahl und ein Ausgangsdrehmoment des Antriebs in eine Antriebsdrehzahl und ein Antriebsdrehmoment an dem Antriebsrad gewandelt werden. Insbesondere kann die Antriebsdrehzahl kleiner sein als die Ausgangsdrehzahl und das Antriebsdrehmoment höher sein als das Ausgangsdrehmoment. Durch die Erzeugung eines hohen Drehmoments bei vergleichsweise geringen Drehzahlen kann eine zuverlässige Fortbewegung der Inspektionseinheit auch über Steigungen sichergestellt werden.

Eine Rohrleitung kann im Rahmen der Erfindung vorzugsweise eine Gasleitung, insbesondere eine Gashochdruckleitung, sein. Eine Rohrleitung kann vorzugsweise einen kreisrunden Querschnitt aufweisen. Auch andere Querschnittsformen einer Rohrleitung sind vorliegend denkbar.

Die Angaben horizontal und/oder vertikal sollen im Rahmen der vorliegenden Anmeldung in Bezug auf eine Ausrichtung der Inspektionsvorrichtung auf einer horizontal orientierten Rohrleitung verstanden werden.

Die Längserstreckung soll vorliegend eine Erstreckung entlang einer angedachten Bewegungsrichtung der Inspektionseinheit verstanden werden, wobei die Bewegungsrichtung einer Bewegungsrichtung bei einer Geradeausfahrt der Inspektionseinheit entspricht. Somit entspricht die Längserstreckung insbesondere der Erstreckungsrichtung einer Mittelachse einer Rohrleitung, auf der die Inspektionseinheit anordbar ist.

Im Rahmen der Erfindung kann es von Vorteil sein, dass die Antriebseinheit an dem Trägerelement zumindest teilweise beweglich angeordnet ist, sodass die Antriebseinheit relativ zu dem Trägerelement zumindest abschnittsweise verschwenkbar ist. Vorzugsweise kann die Schwenkachse dabei parallel oder im Wesentlichen parallel zu einer Längserstreckung des Trägerelements und/oder orthogonal oder im Wesentlichen orthogonal zu der Rotationsachse des Antriebsrads orientiert sein. In anderen Worten ist es denkbar, dass die Antriebseinheit und das Trägerelement über wenigstens eine Gelenkverbindung, insbesondere über wenigstens ein Drehgelenk und/oder wenigstens ein Kugelgelenk, verbunden sind, sodass die Antriebseinheit relativ zu dem Trägerelement zumindest abschnittsweise verschwenkt werden kann. Durch eine Verschwenkung der Antriebseinheit relativ zu dem Trägerelement ergibt sich der Vorteil einer flexibleren Ausrichtung des Antriebsrads. Entsprechend kann die Inspektionsvorrichtung flexibler an örtliche Gegebenheiten angepasst und vielfältigere Einsatzmöglichkeiten der Inspektionsvorrichtung realisiert werden. So kann bspw. das Trägerelement mit wenigstens einem Führungsrad auf einer ersten Rohrleitung angeordnet sein und das Antriebsrad auf einer zweiten Rohrleitung oder einer Wandfläche angeordnet sein. Je nach Ausrichtung der zweiten Rohrleitung oder Wandfläche zu der ersten Rohrleitung kann durch eine Verschwenkung der Antriebseinheit relativ zu dem Trägerelement eine möglichst großflächige Auflage des Antriebsrads auf der zweiten Rohrleitung oder Wandfläche und somit die Traktion des Antriebsrads zum Antrieb der Inspektionsvorrichtung verbessert werden.

Wenigstens eine Gelenkverbindung, insbesondere wenigstens ein Drehgelenk oder wenigstens ein Kugelgelenk, kann Teil eines Schwenkantriebs bzw. als Schwenkantrieb ausgebildet sein. Unter einem Schwenkantrieb soll vorliegend ein Antrieb verstanden werden, durch den eine Schwenkbewegung durchführbar ist. Hierdurch ergibt sich der Vorteil einer automatisierbaren Verschwenkung zweier Komponenten relativ zueinander, ohne dass ein manueller Eingriff eines Benutzers notwendig ist. Korrekturen des Schwenkwinkels zwischen den betreffenden Komponenten, bspw. zwischen der Antriebseinheit und dem Trägerelement, können so auch dann noch vorgenommen werden, wenn die Inspektionsvorrichtung durch einen Benutzer nicht oder nur noch schwer zugänglich ist. Ferner ist eine präzise Einstellung des Schwenkwinkels durchführbar. Wenigstens ein Schwenkantrieb kann vorzugsweise als ein elektrischer Schwenkantrieb ausgebildet sein. Hierdurch ergibt sich der Vorteil einer automatisierbaren und/oder drahtlosen Ansteuerung des Schwenkantriebs sowie eines im Vergleich zu pneumatischen oder hydraulischen Antrieben einfacheren Aufbaus der Inspektionsvorrichtung.

Im Rahmen der Erfindung ist es denkbar, dass die Antriebseinheit an dem Trägerelement beweglich gelagert ist, sodass ein, insbesondere lateraler, Abstand zwischen der Antriebseinheit und dem Trägerelement zumindest abschnittsweise, insbesondere linear, veränderbar ist. In anderen Worten ist es denkbar, dass die Antriebseinheit und das Trägerelement über wenigstens eine Gelenkverbindung, insbesondere über wenigstens ein Schubgelenk oder Drehschubgelenk, verbunden sind, sodass die Antriebseinheit relativ zu dem Trägerelement zumindest abschnittsweise, insbesondere linear, verschoben werden kann, wobei vorzugsweise durch die Verschiebung ein, insbesondere lateraler, Abstand zwischen dem Trägerelement und der Antriebseinheit zumindest abschnittsweise einstellbar ist. Vorzugsweise kann die Lagerung dabei derart ausgeführt sein, dass eine, insbesondere lineare, Bewegung der Antriebseinheit relativ zu dem Trägerelement entlang einer, vorzugsweise linearen, Bewegungsachse durchführbar ist. Dabei ist denkbar, dass die Bewegungsachse parallel oder im Wesentlichen parallel zu einer Rotationsachse des Antriebsrads und/oder orthogonal oder im Wesentlichen orthogonal zu einer Längserstreckung des Trägerelements orientiert ist. Durch eine Variabilität des Abstandes zwischen Antriebseinheit und Trägerelement ergibt sich der Vorteil einer flexibleren Ausrichtung des Antriebsrads. Entsprechend kann die Inspektionsvorrichtung flexibler an örtliche Gegebenheiten angepasst und vielfältigere Einsatzmöglichkeiten der Inspektionsvorrichtung realisiert werden. So kann bspw. der Abstand zwischen zwei Rohrleitungen oder einer Rohrleitung und einer Wandfläche an verschiedenen Inspektionsorten unterschiedlich sein. Durch die Einstellung des Abstandes zwischen dem Trägerelement und der Antriebseinheit kann jedoch ein von den örtlichen Gegebenheiten zumindest teilweise unabhängiger Einsatz der Inspektionsvorrichtung realisiert werden.

In Bezug auf eine Veränderung des Abstands zwischen der Antriebseinheit und dem Trägerelement bzw. eine Verschwenkung der Antriebseinheit zu dem Trägerelement kann auch vorgesehen sein, dass anstelle der gesamten Antriebseinheit lediglich das Antriebsrad relativ zu dem Trägerelement bewegt wird und der Antrieb positionsfest verbleibt. Eine Bewegung der gesamten Antriebseinheit hat sich jedoch dahingehend als vorteilhaft erwiesen, dass eine Antriebsverbindung zwischen dem Antrieb und dem Antriebsrad nicht variabel ausgeführt werden muss, was letztlich eine einfachere konstruktive Gestaltung der Inspektionsvorrichtung ermöglicht.

Wenigstens eine Gelenkverbindung, insbesondere wenigstens ein Drehgelenk und/oder wenigstens ein Schubgelenk und/oder wenigstens ein Drehschubgelenk und/oder wenigstens ein Kugelgelenk, kann wenigstens ein Feststellmittel umfassen, wodurch eine Position der über die Gelenkverbindung beweglich zueinander gelagerten bzw. beweglich verbundenen Komponenten temporär fixierbar ist. In anderen Worten kann durch das Feststellmittel die Gelenkverbindung in eine starre Verbindung und umgekehrt umgewandelt werden. Insbesondere kann das Feststellmittel dazu ausgebildet sein, zumindest einen Freiheitsgrad der Gelenkverbindung zumindest temporär zu sperren. Hierdurch ergibt sich der Vorteil, dass die betreffende Gelenkverbindung im Betrieb der Inspektionsvorrichtung entlastet werden kann und keine Kraft aktiv auf die Gelenkverbindung aufgeprägt werden muss, um die Ausrichtung der über die Gelenkverbindung verbundenen Komponenten beizubehalten. Wenigstens ein Feststellmittel kann bspw. als eine Schraube ausgebildet sein, wobei durch eine Schraubbewegung der Schraube eine Bewegung der über die Gelenkverbindung verbundenen Komponenten relativ zueinander zumindest teilweise, insbesondere vollständig, blockierbar bzw. freigebbar ist.

Wenigstens eine Gelenkverbindung kann mehrere Gelenke umfassen. Bspw. kann wenigstens eine Gelenkverbindung wenigstens ein Drehgelenk und/oder wenigstens ein Schubgelenk und/oder wenigstens ein Drehschubgelenk und/oder wenigstens ein Kugelgelenk umfassen. Wenigstens eine Gelenkverbindung kann bspw. als ein Teleskopmechanismus ausgebildet sein, wobei der Teleskopmechanismus wenigstens ein Schubgelenk oder mehr als ein Schubgelenk, insbesondere wenigstens zwei Schubgelenke, umfassen kann. Handelt es sich bspw. um eine Teleskopspindel, können die Schubgelenke auch als Drehschubgelenke ausgebildet sein. Ein Teleskopmechanismus hat sich als vorteilhaft in Bezug auf die, insbesondere lineare, Einstellung eines Abstandes zweier Komponenten relativ zueinander gezeigt. Dabei kann es sich bspw. um einen Abstand zwischen der Antriebseinheit und dem Trägerelement handeln, aber auch um die Ausrichtung anderer Komponenten zueinander, wie sie vorliegend beschrieben sind. Ein Teleskopmechanismus bietet den Vorteil einer flexiblen Einstellbarkeit bei gleichzeitig kompaktem Bauraum. Alternativ oder zusätzlich kann wenigstens eine Gelenkverbindung als ein einachsiger oder zweiachsiger oder dreiachsiger Schwenkmechanismus ausgebildet sein, wobei der Schwenkmechanismus wenigstens ein Drehgelenk und/oder wenigstens ein Kugelgelenk umfassen kann. Ein solcher Schwenkmechanismus hat sich insbesondere vorteilhaft in Bezug auf die Einstellung eines Schwenkwinkels zweier Komponenten relativ zueinander gezeigt. Dabei kann es sich bspw. um einen Schwenkwinkel zwischen der Antriebseinheit und dem Trägerelement handeln, aber auch um die Ausrichtung anderer Komponenten zueinander, wie sie vorliegend beschrieben sind.

Wenigstens eine Gelenkverbindung, insbesondere wenigstens ein Schubgelenk und/oder Drehschubgelenk, kann teil eines Hubantriebs sein bzw. als solcher ausgebildet sein. Unter einem Hubantrieb soll vorliegend ein Antrieb verstanden werden, durch den eine, insbesondere lineare, Hubbewegung durchführbar ist. Hierdurch ergibt sich der Vorteil einer automatisierbaren linearen Bewegung zweier Komponenten zueinander, ohne dass ein manueller Eingriff eines Benutzers notwendig ist. Korrekturen des Abstandes zwischen zwei Komponenten, bspw. zwischen der Antriebseinheit und Trägerelement, können so auch dann noch vorgenommen werden, wenn die Inspektionsvorrichtung durch einen Benutzer nicht oder nur noch schwer zugänglich ist. Ferner ist eine präzise Einstellung des Abstandes durchführbar. Wenigstens ein Hubantrieb kann vorzugsweise als ein elektrischer Hubantrieb ausgebildet sein. Hierdurch ergibt sich der Vorteil einer automatisierbaren Ansteuerung des Hubantriebs sowie eines im Vergleich zu pneumatischen oder hydraulischen Antrieben einfacheren Aufbaus der Inspektionsvorrichtung.

Zusätzlich oder alternativ kann vorgesehen sein, dass wenigstens ein Hubantrieb und/oder Schwenkantrieb als ein selbsthemmender Antrieb ausgebildet ist bzw. einen selbsthemmenden Aktuator umfasst. Dies bietet den Vorteil, dass lediglich im Zuge einer Bewegung des jeweiligen Antriebs Energie aufgewendet werden muss. Anschließend wird die eingestellte Position des betreffenden Antriebs durch den selbsthemmenden Aktuator selbstständig und ohne weitere Energiezufuhr zuverlässig gehalten. Ein selbsthemmender Antrieb kann somit als Feststellmittel wirken.

Wenigstens ein Hubantrieb kann im Rahmen der vorliegenden Erfindung als Spindeltrieb und/oder Teleskopantrieb und/oder Teleskopspindel und/oder Hubzylinder ausgebildet sein. Auch Kombinationen der genannten Bauformen sind denkbar. Ein Spindeltrieb bzw. eine Teleskopspindel bietet einen besonders einfachen und kostengünstigen sowie wartungsarmen Aufbau und ferner die Möglichkeit einer sehr exakten Positionseinstellung. Zusätzlich oder alternativ kann wenigstens ein Linearantrieb als ein Hubzylinder, insbesondere Elektrozylinder, ausgebildet sein. Die Verwendung eines Hub- bzw. Elektrozylinders bietet den Vorteil einer besonders kompakten Bauweise. Entsprechend kann der Bauraum der Inspektionsvorrichtung verkleinert und eine höhere Einsatzflexibilität realisiert werden.

Es kann im Rahmen der Erfindung vorgesehen sein, dass wenigstens ein Führungsrad an dem Trägerelement beweglich gelagert ist, sodass ein Abstand zwischen dem Führungsrad und dem Trägerelement andererseits zumindest abschnittsweise, insbesondere linear, veränderbar ist. In anderen Worten ist es denkbar, dass wenigstens ein Führungsrad und das Trägerelement über wenigstens eine Gelenkverbindung, insbesondere wenigstens ein Schubgelenk, verbunden sind, sodass das Führungsrad relativ zu dem Trägerelement zumindest abschnittsweise, insbesondere linear, verschoben werden kann, sodass ein Abstand zwischen dem Führungsrad und dem Trägerelement zumindest abschnittsweise einstellbar bzw. veränderbar ist. Vorzugsweise kann die Gelenkverbindung dabei derart ausgeführt sein, dass eine, insbesondere lineare, Bewegung des Führungsrads bzw. des Paars von Führungsrädern relativ zu dem Trägerelement entlang einer, vorzugsweise linearen, Bewegungsachse, bspw. über einen Teleskopmechanismus, durchführbar ist. Dabei ist es denkbar, dass die Bewegungsachse parallel oder im Wesentlichen parallel zu einer Rotationsachse des Führungsrads orientiert ist. Hierdurch ergibt sich der Vorteil, dass die Spurbreite des Trägerelements einstellbar ist. Durch eine Variabilität des Abstandes zwischen wenigstens einem Führungsrad und einem Trägerelement ergibt sich insgesamt der Vorteil einer flexibleren Ausrichtung des Führungsrads bzw. der Führungsräder. Entsprechend kann die Inspektionsvorrichtung flexibler an örtliche Gegebenheiten, insbesondere an unterschiedliche Rohrleitungsdurchmesser, angepasst und vielfältigere Einsatzmöglichkeiten der Inspektionsvorrichtung realisiert werden. So kann die Spurbreite bspw. stets entsprechend eines Rohrleitungsdurchmessers verändert werden, sodass eine sichere Positionierung und Fortbewegung der Inspektionsvorrichtung auf der Rohrleitung durchführbar ist.

Es ist ferner denkbar, dass wenigstens ein Führungsrad an dem Trägerelement schwenkbar gelagert ist, sodass das Führungsrad relativ zu dem Trägerelement zumindest abschnittsweise verschwenkbar ist. Vorzugsweise kann die Schwenkachse dabei orthogonal oder im Wesentlichen orthogonal zu der Rotationsachse des Führungsrads orientiert sein. In anderen Worten ist es denkbar, dass wenigstens ein Führungsrad und das Trägerelement über wenigstens eine Gelenkverbindung, insbesondere wenigstens ein Drehgelenk und/oder Kugelgelenk, miteinander verbunden sind, sodass das Führungsrad relativ zu dem Trägerelement zumindest abschnittsweise verschwenkt werden kann. Durch eine Verschwenkung des Führungsrads relativ zu dem Trägerelement ergibt sich der Vorteil einer flexibleren Ausrichtung des Führungsrads. Entsprechend kann die Inspektionsvorrichtung flexibler an örtliche Gegebenheiten, insbesondere unterschiedliche Rohrleitungsdurchmesser, angepasst und vielfältigere Einsatzmöglichkeiten der Inspektionsvorrichtung realisiert werden. So kann insbesondere bei Rohrleitungen mit unterschiedlichen Rohrleitungsdurchmessern, auf denen die Inspektionsvorrichtung positioniert wird, stets eine sichere Auflage des Führungsrads auf der Rohroberfläche und so eine zuverlässige Führung der Inspektionsvorrichtung, insbesondere des Trägerelements, durch ein oder mehrere Führungsräder realisiert werden.

Insbesondere kann vorgesehen sein, dass bei wenigstens einem Führungsrad eine kombinierte Bewegbarkeit relativ zu dem Trägerelement vorgesehen ist, welche eine zumindest abschnittsweise Verschwenkung des Führungsrads relativ zu dem Trägerelement und eine Veränderung des Abstands des Führungsrads relativ zu dem Trägerelement umfasst. Hierdurch kann eine besonders vorteilhafte Anpassbarkeit der Inspektionsvorrichtung, insbesondere in Bezug auf ihre Verwendung für unterschiedliche Rohrleitungsdurchmesser, realisiert werden.

Auch ist es denkbar, dass an dem Trägerelement wenigstens ein Paar von Führungsrädern angeordnet ist, wobei insbesondere das Paar von Führungsrädern zwei Führungsräder, vorzugsweise ein erstes Führungsrad und ein zweites Führungsrad umfasst. Besonders bevorzugt können das erste Führungsrad und das zweite Führungsrad des Paares von Führungsrädern in Bezug auf eine Längserstreckung des Trägerelements an einer gleichen oder im Wesentlichen gleichen Position angeordnet sein. Diese Angabe kann sich vorzugsweise auf eine Ausrichtung der Führungsräder bei einer Geradeausfahrt der Inspektionsvorrichtung beziehen. Durch die Verwendung wenigstens eines Paares von Führungsrädern kann der Vorteil erzielt werden, dass eine Rohrleitung zumindest abschnittsweise zwischen den Führungsrädern des Paars von Führungsrädern aufgenommen werden kann. Hierdurch ergibt sich eine sicherere und zuverlässigere Positionierung der Inspektionsvorrichtung auf der Rohrleitung sowie darüber hinaus eine bessere Führung der Inspektionsvorrichtung auf bzw. entlang der Rohrleitung durch die Führungsräder. Als besonders vorteilhaft hat es sich erwiesen, wenn an dem Trägerelement, insbesondere an wenigstens einem oder jedem Teilglied, wenigstens zwei oder genau zwei Paare von Führungsrädern angeordnet sind, wobei vorzugsweise wenigstens zwei Paare von Führungsrädern einen Versatz entlang der Längserstreckung des Trägerelements und/oder des Teilglieds aufweisen und/oder in Bezug auf eine Richtung orthogonal zu der Längserstreckung des Trägerelements an einer gleichen und/oder im Wesentlichen gleichen Position angeordnet sind.

Zusätzlich oder alternativ kann vorgesehen sein, dass an dem Trägerelement wenigstens zwei Führungsräder angeordnet sind, wobei zumindest zwei Führungsräder einen Versatz entlang der Längserstreckung des Trägerelements aufweisen sowie ferner einen Versatz orthogonal zu der Längserstreckung des Trägerelements aufweisen. Auch hierdurch kann der Vorteil erzielt werden, dass eine Rohrleitung zumindest abschnittsweise zwischen den Führungsrädern aufgenommen werden kann, ohne dass Paare von Führungsrädern gebildet werden müssen. Hierdurch ergibt sich eine sicherere und zuverlässigere Positionierung der Inspektionsvorrichtung auf der Rohrleitung sowie darüber hinaus eine bessere Führung der Inspektionsvorrichtung auf bzw. entlang der Rohrleitung durch die Führungsräder.

Es kann im Rahmen der Erfindung vorgesehen sein, dass wenigstens ein Paar von Führungsrädern an dem Trägerelement schwenkbar gelagert ist, sodass das Paar von Führungsrädern relativ zu dem Trägerelement zumindest abschnittsweise verschwenkbar ist. Insbesondere kann die schwenkbare Lagerung dabei derart ausgebildet sein, dass ein Lenkwinkel des Paares von Führungsrädern durch die Verschwenkung veränderbar ist. Vorzugsweise kann die Schwenkachse dabei orthogonal oder im Wesentlichen orthogonal zu der Längserstreckung des Trägerelements, insbesondere vertikal, orientiert sein. In anderen Worten ist es denkbar, dass wenigstens ein Paar von Führungsrädern und das Trägerelement über wenigstens eine Gelenkverbindung, insbesondere wenigstens ein Drehgelenk und/oder Kugelgelenk, verbunden sind, sodass das Paar von Führungsrändern relativ zu dem Trägerelement zumindest abschnittsweise verschwenkt werden kann. Durch eine Verschwenkung des Paars von Führungsrädern relativ zu dem Trägerelement ergibt sich der Vorteil, dass an dem Paar von Führungsrädern ein Lenkeinschlag vorgenommen werden kann. Hierdurch kann eine verbesserte Führung der Basiseinheit bzw. der Inspektionsvorrichtung auf und/oder entlang der Rohrleitung realisiert werden.

Ferner kann es im Rahmen der Erfindung vorgesehen sein, dass eine Rotationsachse wenigstens eines Führungsrads zu einer Rotationsachse wenigstens eines weiteren Führungsrads geneigt orientiert ist, wobei vorzugsweise der Neigungswinkel zwischen den Rotationsachsen zwischen 30° und 170°, insbesondere zwischen 45° und 150°, vorzugsweise zwischen 60° und 130°, beträgt. In anderen Worten kann vorgesehen sein, dass wenigstens zwei Führungsräder derart zueinander ausgerichtet sind, dass ihre Rotationsachsen nicht parallel verlaufen, sondern zueinander geneigt orientiert sind. Hierdurch kann eine bessere Auflage der Führungsräder auf der Rohrleitungsoberfläche erzielt werden, wodurch eine zuverlässigere Führung der Inspektionsvorrichtung entlang bzw. auf der Rohrleitung realisierbar ist. Insbesondere kann vorgesehen sein, dass bei wenigstens einem Paar von Führungsrädern, die Führungsräder des betreffenden Paares von Führungsrädern auf die oben beschriebene Weise zueinander orientiert sind.

In Bezug auf die vorliegende Erfindung ist es vorgesehen, dass an dem Trägerelement wenigstens ein Gewichtselement zur Stabilisierung einer Schwerpunktlage der Inspektionsvorrichtung angeordnet ist. Eine Bewegung der Antriebseinheit relativ zu dem Trägerelement oder auch eine Bewegung der Inspektionsvorrichtung führt zu einer Verschiebung des Gesamtschwerpunkts der Inspektionsvorrichtung. Eine solche Verschiebung kann in einem gewissen Rahmen akzeptabel sein. Größere Verschiebungen der Schwerpunktlage zu einer Seite der Inspektionsvorrichtung können jedoch negative Auswirkungen haben. So kann bspw. ein Antriebsrad an Traktion einbüßen, wenn der Gesamtschwerpunkt zu sehr auf der Seite des Trägerelements liegt. Alternativ kann ein zu hohes Antriebsmoment für eine Fortbewegung der Inspektionsvorrichtung erforderlich sein, sofern der Schwerpunkt zu weit auf der Seite der Antriebseinheit liegt. Im Extremfall kann es zu einem Kippen der Inspektionsvorrichtung kommen. Durch die Anordnung wenigstens eines Gewichtselements an dem Trägerelement kann die Inspektionsvorrichtung weniger anfällig gegen Schwerpunktänderungen gemacht werden. Vorzugsweise kann wenigstens ein Gewichtselement zwischen dem Trägerelement und dem Antriebsrad angeordnet sein, sodass insbesondere das Gewichtselement dazu beiträgt, eine Lage des Gesamtschwerpunktes der Inspektionsvorrichtung zwischen Trägerelement und Antriebsrad zu stabilisieren. Eine solche Schwerpunktlage hat sich in Bezug auf den Betrieb der Inspektionsvorrichtung als vorteilhaft erwiesen. Wenigstens ein Gewichtselement kann aus einem Metall, insbesondere aus Eisen, Blei oder Stahl ausgebildet sein.

Ferner ist es vorgesehen, dass wenigstens ein Gewichtselement zur Stabilisierung einer Schwerpunktlage der Inspektionsvorrichtung an dem Trägerelement beweglich gelagert ist, sodass ein Abstand zwischen dem Gewichtselement und dem Trägerelement zumindest abschnittsweise, insbesondere linear, veränderbar ist bzw. das Gewichtselement zumindest abschnittsweise relativ zu dem Trägerelement, insbesondere linear, bewegbar ist. Dabei kann vorgesehen sein, dass eine Bewegungsachse wenigstens eines Gewichtselements orthogonal oder im Wesentlichen orthogonal zur Längserstreckung des Trägerelements orientiert ist. Die bewegliche Lagerung wenigstens eines Gewichtselements kann bspw. über wenigstens eine, insbesondere an dem Trägerelement angeordnete, Führungskulisse realisiert sein, wobei vorzugsweise das Gewichtselement zumindest abschnittsweise formschlüssig in der Führungskulisse aufgenommen ist und/oder zumindest abschnittsweise entlang der Führungskulisse verschiebbar ist. Wenigstens eine Führungskulisse kann zumindest abschnittsweise als ein L-Profil und/oder U-Profil ausgebildet sein. Das Gewichtselement kann manuell entlang der Führungskulisse verschiebbar sein. Auch kann die bewegliche Lagerung über einen Linearantrieb, insbesondere einen Spindeltrieb realisiert werden. So kann das Gewichtselement durch Ansteuerung des Linearantriebs in der Führungskulisse verschoben und in seiner Position relativ zu dem Trägerelement verändert werden. Durch eine Verschiebung des Gewichtselements kann aktiv Einfluss auf die Schwerpunktlage der Inspektionsvorrichtung genommen werden. Insbesondere kann durch eine Verschiebung des Gewichtselements ein durch das Gewichtselement erzeugtes Moment zur Stabilisierung der Inspektionsvorrichtung variiert werden. So kann die Wirkung vergleichsweise leichter Gewichtselemente verbessert und das Gesamtgewicht der Inspektionsvorrichtung gering gehalten werden. Zusätzlich oder alternativ kann wenigstens ein Feststellmittel vorgesehen sein, um wenigstens ein Gewichtselement in seiner Position, insbesondere relativ zu dem Trägerelement, zumindest temporär festzulegen. Das Feststellmittel kann bspw. als eine Schraube ausgebildet sein. Zur Sicherung bzw. zum Kontern der Schraube kann bspw. ein Gewinde in dem Trägerelement oder eine Mutter verwendet werden. Auch kann im Falle eines Linearantriebs der Linearantrieb, wie oben beschrieben, als ein selbsthemmender Linearantrieb ausgebildet sein bzw. durch wenigstens einen selbsthemmenden Aktuator als Feststellmittel wirken.

Im Rahmen der Erfindung kann es von Vorteil sein, dass das Trägerelement wenigstens zwei Teilglieder umfasst, wobei die Teilglieder derart gelenkig miteinander verbunden sind, sodass die Teilglieder zumindest abschnittsweise relativ zueinander verschwenkbar sind. In anderen Worten kann es vorgesehen sein, dass das Trägerelement mehrgliedrig ausgebildet ist, wobei das Trägerelement wenigstens zwei Teilglieder umfasst und wobei wenigstens die zwei Teilglieder durch wenigstens eine Gelenkverbindung miteinander verbunden sind, sodass die Teilglieder zumindest abschnittsweise relativ zueinander verschwenkbar sind. Hierdurch wird der Vorteil erzielt, dass eine verbesserte Führung der Inspektionsvorrichtung entlang gekrümmter Rohrleitungen realisierbar ist. Dies kann insbesondere bei einer großen Längserstreckung des Trägerelements von Vorteil sein. Wenigstens eine zwischen zwei Teilgliedern ausgebildete Schwenkachse kann vorzugsweise orthogonal oder im Wesentlichen orthogonal zu der Längserstreckung des Trägerelements bzw. vertikal orientiert sein. Wenigstens eine Gelenkverbindung kann bspw. wenigstens ein oder genau ein einachsiges Drehgelenk umfassen. Auch eine Ausbildung als Kugelgelenk ist vorliegend denkbar. Durch ein Kugelgelenk ergibt sich ein vorteilhaftes Fahrverhalten der Inspektionsvorrichtung auch bei Änderungen im Rohrleitungsverlauf, welche die Steigung der Rohrleitung verändern. Zusätzlich oder alternativ kann vorgesehen sein, dass an jedem Teilglied wenigstens zwei Führungsräder oder wenigstens zwei Paare von Führungsrädern angeordnet sind, wobei insbesondere die Führungsräder bzw. die Paare von Führungsrädern einen Versatz entlang der Längserstreckung des Teilglieds aufweisen. Hierdurch kann eine zwischen den Teilgliedern vorgesehene Gelenkverbindung entlastet und eine zuverlässige Bewegung der Inspektionsvorrichtung entlang bzw. auf der Rohrleitung unterstützt werden.

Es kann im Rahmen der Erfindung optional vorgesehen sein, dass durch die Inspektionsvorrichtung, insbesondere durch die Inspektionseinheit, wenigstens eins der folgenden Sensorelemente umfasst ist:
- Wenigstens ein Bildsensor zur Erfassung von Bildern der Rohrleitung,
- wenigstens ein Temperatursensor zur Erfassung der Temperatur der Rohrleitung,
- wenigstens ein Leckagesensor zur Erfassung einer Leckage an der Rohrleitung,
- wenigstens ein Isolationssensor zur Prüfung der Isolation der Rohrleitung.

Als besonders bevorzugt hat es sich dargestellt, wenn mehrere oder sogar alle der genannten Sensorelemente durch die Inspektionseinheit umfasst sind.

Wenigstens ein Bildsensor kann vorliegend als eine Kamera ausgebildet sein. Durch den Bildsensor sind Bilder der Rohrleitung erfassbar, welche vorzugsweise durch einen Benutzer der Inspektionsvorrichtung auswertbar sind. Hierdurch kann eine optische Bewertung der äußeren Oberfläche der Rohrleitung durchgeführt werden, wodurch bspw. Verschleißerscheinungen an der Rohrleitungsoberfläche wie Risse oder Versprödung auf einfache Weise feststellbar sind.

Alternativ oder zusätzlich kann wenigstens ein Temperatursensor als ein optischer Temperatursensor, insbesondere als ein Infrarot-Temperatursensor, ausgebildet sein. Hierdurch ergibt sich der Vorteil einer berührungslosen Temperaturmessung der Rohrleitungsoberfläche. Durch die Erfassung der Rohrleitungstemperatur kann festgestellt werden, ob sich die Rohrleitung, bspw. durch äußere Einflüsse, an bestimmten Positionen zu stark erwärmt. Ferner kann die Temperaturmessung auch Hinweise auf mögliche Leckagen liefern, da das in der Rohrleitung geführte Gas eine von der Umgebung abweichende Temperatur aufweist und/oder es an der Leckageposition zu einer Expansion des aus der Rohrleitung austretenden Gases und daher lokale Temperaturunterschiede an der Rohrleitung im Bereich der Leckageposition feststellbar sind.

Es ist ferner optional möglich, dass wenigstens ein Leckagesensor als ein akustischer Leckagesensor ausgebildet ist. Durch den hohen Druck des innerhalb der Rohrleitung geführten Gases entsteht an der Leckageposition, an welcher ein Teil des in der Rohrleitung geführten Gases in die Umgebung entweicht, ein hochfrequenter Ton. Dieser hochfrequente Ton kann durch den akustischen Leckagesensor erfasst und eine Leckage an der Rohrleitung detektiert bzw. eine Leckageposition an der Rohrleitung geortet werden. Ein akustischer Leckagesensor bietet den Vorteil, dass das Messergebnis durch äußere Einflüsse wie Wind nicht verfälscht wird. Insbesondere kann der Einfluss von Wind Konzentrationsmessungen an der Rohrleitung erheblich erschweren. Zusätzlich oder alternativ kann jedoch ebenfalls vorgesehen sein, dass wenigstens ein Leckagesensor als ein Konzentrationssensor ausgebildet ist. So kann der Konzentrationssensor bspw. für eine Erfassung einer Erdgaskonzentration und/oder Wasserstoffkonzentration in der Luft ausgebildet sein. Durch das vorliegen von Erdgas bzw. Wasserstoff in der Umgebungsluft kann auf eine Leckage in der Rohrleitung geschlossen werden, wobei die Konzentration im Bereich der Leckageposition entsprechend am höchsten ist. Eine Konzentrationsmessung bietet den Vorteil, dass ein Rückschluss auf die aus der Rohrleitung austretende Gasmenge möglich ist. Hierdurch kann besser abgewogen werden, ob und wie dringend etwaige Reparaturmaßnahmen durchzuführen sind, ohne dass ein sicherer Betrieb der Rohrleitung gefährdet wird. Zusätzlich oder alternativ kann der Konzentrationssensor zur Erfassung einer Konzentration wenigstens eines weiteren Gases, insbesondere Industriegases, ausgebildet sein. Ein Industriegas kann vorzugsweise Stickstoff, Sauerstoff, Argon, Wasserstoff, Helium, Ethen, Ethin, Kohlendioxid, Kohlenmonoxid, Xenon, Neon oder Krypton sein. Weitere Gase bzw. Industriegase sind vorliegend denkbar. Die Auswahl des Konzentrationssensors kann bevorzugt entsprechend des Einsatzortes der Inspektionsvorrichtung erfolgen.

Durch einen Isolationssensor kann die Isolation einer Rohrleitung auf etwaige Fehler überprüft werden. Wenigstens ein Isolationssensor kann einen Prüfkopf aufweisen, wobei der Prüfkopf zumindest abschnittsweise an die Rohrleitung anlegbar ist. Es kann auch vorgesehen sein, dass der Prüfkopf geringfügig beabstandet von der Rohrleitung angeordnet wird bzw. anordbar ist. An dem Prüfkopf ist eine elektrische Spannung anlegbar, wobei durch den Prüfkopf ermittelbar ist, ob ein Spannungsdurchschlag erfolgt, wobei ein Spannungsdurchschlag einen Fehler in der Isolierung der Rohrleitung impliziert. Entsprechend können durch den Isolationssensor Isolationsfehler an der Rohrleitung detektiert sowie präzise lokalisiert werden.

Es ist ferner denkbar, dass durch die Inspektionsvorrichtung wenigstens eins der folgenden Sensorelemente umfasst ist:
- Wenigstens ein, insbesondere kapazitiver, Abstandssensor, zur frühzeitigen Detektion einer, insbesondere bevorstehenden, Kollision der Inspektionsvorrichtung,
- wenigstens ein Positionssensor zur Bestimmung einer, insbesondere aktuellen, Position der Inspektionsvorrichtung,
- wenigstens ein Wegstreckensensor zur Erfassung einer von der Inspektionsvorrichtung auf der Rohrleitung zurückgelegten Wegstrecke.

Es kann vorgesehen sein, dass wenigstens ein Abstandssensor an der Antriebseinheit angeordnet ist. Zusätzlich oder alternativ kann vorgesehen sein, dass wenigstens ein Abstandssensor an der Basiseinheit, insbesondere an der Antriebseinheit und/oder dem Trägerelement, angeordnet ist. Zusätzlich oder alternativ kann vorgesehen sein, dass wenigstens ein Abstandssensor an der Inspektionseinheit angeordnet ist. Dabei kann vorgesehen sein, dass wenigstens ein Abstandssensor an einem Rand der jeweiligen Komponenten angeordnet ist, wobei durch den Rand eine räumliche Ausdehnung der betreffenden Komponente in wenigstens eine Richtung begrenzt wird. Hierdurch kann eine Kollision der betreffenden Komponente mit etwaigen Hindernissen zuverlässig erkannt werden. Hindernisse können bspw. Rohrleitungsbefestigungen oder lokale räumliche Verengungen sein. Wenigstens ein Abstandssensor kann als ein kapazitiver Abstandssensor, insbesondere kapazitiver Näherungssensor, ausgebildet sein. Hierdurch ergibt sich der Vorteil eines einfachen und kostengünstigen Aufbaus sowie einer zuverlässigen Detektierbarkeit von Kollisionen.

Wenigstens ein Positionssensor kann als ein GNSS-Sensor, insbesondere als ein GPS-Sensor, ausgebildet sein. So kann bspw. die Position der Inspektionsvorrichtung aus der Ferne überwacht werden, insbesondere wenn die Inspektionsvorrichtung in schwer einsehbaren Bereichen operiert. Auch kann durch den GPS-Sensor die Position einer Rohrleitungsbeschädigung erfasst und gesichert werden.

Wenigstens ein Wegstreckensensor kann als ein, insbesondere inkrementeller, Drehwinkelsensor ausgebildet sein, wobei insbesondere der Wegstreckensensor dazu ausgebildet ist den Drehwinkel wenigstens eines Antriebsrads zu erfassen. Es kann vorgesehen sein, dass für jede volle Umdrehung ein Inkrementieren des Drehwinkelsensors erfolgt. So kann unter Verwendung eines Durchmessers des Antriebsrads aus dem für das Antriebsrad erfassten kumulierten Drehwinkel eine zurückgelegte Wegstrecke ermittelt werden. Dies bietet bspw. den Vorteil, dass eine Position der Inspektionsvorrichtung entlang einer Rohrleitung ermittelt werden kann. Auch kann die Position von Schäden an der betreffenden Rohrleitung auf einfache Weise erfasst und weiterverarbeitet werden.

Auch ist es denkbar, dass durch die Inspektionsvorrichtung, insbesondere durch die Inspektionseinheit, wenigstens eins der folgenden umfasst ist:
- Wenigstens eine Markierungseinheit zur, insbesondere farblichen, Markierung einer Position an der Rohrleitung,
- Wenigstens eine Werkzeugeinheit umfassend wenigstens ein Werkzeug.

Die Markierungseinheit kann einen Vorratsbehälter zur Bevorratung wenigstens eines Markierungsmediums umfassen. Das Markierungsmedium kann als eine Flüssigkeit oder als ein Pulver vorliegen. Ferner kann die Markierungseinheit wenigstens einen Düsenkopf zur Ausbringung des Markierungsmediums umfassen. Die Düse kann mit dem Vorratsbehälter derart verbunden sein, dass, insbesondere durch eine Pumpe und/oder oder einen Drucklufttank, das Markierungsmedium aus dem Vorratsbehälter zum Düsenkopf transportierbar und durch den Düsenkopf auf die Rohrleitung aufbringbar ist. Durch eine Markierungseinheit ergibt sich der Vorteil, dass als fehlerhaft detektierte Positionen an der Rohrleitung markiert und so visuell festgehalten werden. So kann bspw. im Nachgang an der Rohrleitung tätiges Personal die fehlerhaften und zu wartenden Stellen an der Rohrleitung schnell und zuverlässig auffinden. Wenigstens eine Markierungseinheit und/oder wenigstens eine Werkzeugeinheit kann vorzugsweise an einem Inspektionsarm, insbesondere an einem Inspektionskopf, der Inspektionseinheit angeordnet sein.

Wenigstens ein Werkzeug der Werkzeugeinheit kann bspw. als ein Schraubendreher oder Schraubenschlüssel ausgebildet sein. So kann das Werkzeug bspw. an ein Befestigungsmittel der Rohrleitung, insbesondere an eine Schraube, herangeführt und mit diesem in Eingriff gebracht werden. Die Werkzeugeinheit kann einen Antrieb umfassen, wobei über den Antrieb das Werkzeug in Rotation versetzt werden kann. So kann folglich ein Befestigungsmittel an der Rohrleitung, bspw. wenn es sich gelöst hat, wieder befestigt werden, ohne dass dies nachfolgend durch Wartungspersonal durchgeführt werden muss. Dies kann bspw. eine Sicherung von Rohrschellen oder anderweitigen Wandbefestigungen der Rohrleitungen betreffen. Ferner ist es denkbar, dass das Werkzeug eine, insbesondere optische, Erfassungseinheit umfasst, wobei durch die Erfassungseinheit die Position und Ausrichtung wenigstens eines Befestigungsmittels erfassbar ist, sodass das Werkzeug zuverlässig und/oder automatisiert mit dem Befestigungsmittel in Eingriff bringbar ist.

Im Rahmen der Erfindung kann vorgesehen sein, dass die Inspektionseinheit wenigstens einen Inspektionsarm umfasst. Es kann vorzugsweise vorgesehen sein, dass der Inspektionsarm zumindest abschnittsweise relativ zu dem Trägerelement bewegbar ist. In anderen Worten ist es denkbar, dass der Inspektionsarm und das Trägerelement über wenigstens eine Gelenkverbindung, insbesondere wenigstens ein Schubgelenk und/oder wenigstens ein Drehgelenk, miteinander verbunden sind, sodass der Inspektionsarm zumindest abschnittsweise relativ zu dem Trägerelementbewegbar ist. Durch eine Bewegbarkeit des Inspektionsarms kann eine verbesserte Ausrichtung von Sensoren relativ zu der Rohrleitung realisiert werden, sodass eine entsprechend gründliche und zuverlässige Inspektion der Rohrleitung durchführbar ist.

Es kann vorgesehen sein, dass der Inspektionsarm und das Trägerelement über wenigstens eine Gelenkverbindung, insbesondere wenigstens ein Schwenkgelenk und/oder Kugelgelenk und/oder Drehgelenk, miteinander verbunden sind, sodass der Inspektionsarm zumindest abschnittsweise relativ zu der Basiseinheit bzw. dem Trägerelement verschwenkbar ist. Dabei kann die Schwenkachse vorzugsweise orthogonal oder im Wesentlichen orthogonal zu der Längserstreckung des Trägerelements, insbesondere vertikal, orientiert sein. Dabei kann die Schwenkachse vorzugsweise orthogonal oder im Wesentlichen orthogonal zu der Längserstreckung des Trägerelements orientiert sein. Zusätzlich oder alternativ ist es denkbar, dass der Inspektionsarm und das Trägerelement über wenigstens eine Gelenkverbindung, insbesondere wenigstens ein Schubgelenk, miteinander verbunden sind, sodass ein Abstand zwischen dem Inspektionsarm und dem Trägerelement, insbesondere dem Trägerelement, zumindest abschnittsweise, vorzugsweise linear, veränderbar ist. Hierdurch ergibt sich der Vorteil einer flexibleren Positionierbarkeit von Sensorelementen relativ zu der Rohrleitung.

Besonders bevorzugt kann eine kombinierte Bewegbarkeit zur Verschwenkung und Veränderung des Abstandes des Inspektionsarms relativ zu dem Trägerelement vorgesehen sein. Dies kann bspw. durch eine kombinierte Anordnung eines Schwenkantriebs und eines Hubantriebs realisiert werden. Bspw. kann hierzu ein Hubantrieb auf dem Trägerelement angeordnet sein, wobei auf dem Hubantrieb ein Schwenkantrieb und der Inspektionsarm auf dem Schwenkantrieb angeordnet ist. Auch die Verwendung einer integrierten Bauform der genannten Antriebe, insbesondere eines Hub-Schwenkantriebs, ist denkbar.

Insbesondere kann vorgesehen sein, dass wenigstens ein Sensorelement der Inspektionseinheit an dem Inspektionsarm, vorzugsweise an einem, insbesondere der Rohrleitung zugewandten, Ende des Inspektionsarms, angeordnet ist. Dabei kann es sich insbesondere um wenigstens einen Bildsensor und/oder Temperatursensor und/oder Isolationssensor und/oder Leckagesensor und/oder Abstandssensor handeln. Ein Ende des Inspektionsarms kann vorteilhaft durch einen Inspektionskopf gebildet werden.

Wenigstens ein Inspektionsarm kann vorteilhafter Weise, insbesondere an einem der Rohrleitung zugewandten Ende, einen Inspektionskopf umfassen, wobei der Inspektionskopf insbesondere dazu ausgebildet ist eine, insbesondere zu inspizierende, Rohrleitung zumindest abschnittsweise, insbesondere formschlüssig, aufzunehmen. In anderen Worten kann vorgesehen sein, dass der Inspektionskopf zumindest abschnittsweise komplementär zu einer Rohrleitung ausgeformt ist. Insbesondere ist denkbar, dass der Inspektionskopf zumindest abschnittsweise als ein Kreissegment ausgebildet ist bzw. eine kreissegmentförmige Aufnahme zur zumindest abschnittsweisen Aufnahme einer Rohrleitung ausbildet. Hierdurch kann der Inspektionskopf nah an die Rohrleitung herangeführt und ein gleichmäßiger Abstand des Inspektionskopfs zur Rohrleitung entlang einer der Rohrleitung zugewandten Oberfläche des Inspektionskopfs realisiert werden. An dem Inspektionskopf kann wenigstens ein Sensorelement angeordnet sein. Dabei kann es sich insbesondere um wenigstens einen Bildsensor und/oder Temperatursensor und/oder Isolationssensor und/oder Leckagesensor und/oder Abstandssensor handeln. Durch einen an dem Inspektionskopf angeordneten Abstandssensor kann zusätzlich oder alternativ zu einer Detektion einer möglichen Kollision auch ein Abstand von dem Inspektionskopf zu der Rohrleitung erfasst werden. So kann eine gleichmäßige Positionierung des Inspektionskopfs relativ zu der Rohrleitungsoberfläche überwacht werden. Wenigstens ein Inspektionskopf kann vorzugsweise lösbar an dem Inspektionsarm angeordnet sein. Hierdurch ergibt sich der Vorteil einer Austauschbarkeit des Inspektionskopfes. So kann bspw. in Abhängigkeit des Rohrdurchmessers der Rohrleitung ein passender Inspektionskopf an dem Inspektionsarm angeordnet werden.

Zusätzlich oder alternativ kann vorgesehen sein, dass wenigstens ein Inspektionskopf wenigstens ein Teilkreisteleskop umfasst, wobei durch das Teilkreisteleskop wenigstens ein Sensorelement zumindest abschnittsweise entlang des Umfangs, insbesondere in einem konstanten Abstand zu der Rohrleitung, bewegbar ist. Hierdurch ergibt sich der Vorteil, dass wenigstens ein Sensorelement einen größeren Bereich der Rohroberfläche erfassen kann und somit eine genauere und einfachere bzw. schnellere Inspektion der Rohrleitung durchführbar ist. Wenigstens ein Teilkreisteleskop kann wenigstens ein, insbesondere starres, Hauptelement sowie wenigstens ein zu dem Hauptelement bewegbares Teleskopelement umfassen. Dabei kann es vorgesehen sein, dass das Hauptelement und das Teleskopelement kreisbogenförmig bzw. bogenförmig ausgestaltet sind und durch eine Bewegung des Teleskopelements relativ zu dem Hauptelement ein Umfang des Teilkreisteleskops veränderbar ist. Wenigstens ein Teilkreisteleskop kann vorzugsweise wenigstens einen Antrieb umfassen, wobei insbesondere der Antrieb mit wenigstens einem Teleskopelement derart in Wirkverbindung bringbar ist, sodass wenigstens ein Teleskopelement durch den Antrieb relativ zu dem Hauptelement verschiebbar bzw. bewegbar ist.

Es kann ferner in Bezug auf die vorliegende Erfindung vorteilhaft vorgesehen sein, dass wenigstens ein Inspektionsarm wenigstens zwei Teilglieder umfasst. In anderen Worten kann vorgesehen sein, dass wenigstens ein Inspektionsarm mehrgliedrig ausgebildet ist, wobei der Inspektionsarm wenigstens ein erstes Teilglied und ein zweites Teilglied umfasst. Es ist ferner denkbar, dass der Inspektionsarm mehr als zwei Teilglieder, insbesondere wenigstens drei oder drei, vorzugsweise wenigstens vier oder vier, Teilglieder umfasst. Wenigstens zwei Teilglieder des Inspektionsarms können geneigt zueinander angeordnet und/oder zumindest abschnittsweise miteinander verbunden sein. Insbesondere ist denkbar, dass wenigstens zwei Teilglieder über wenigstens eine Gelenkverbindung miteinander verbunden sind. Über eine mehrgliedrige Ausbildung des Inspektionsarms kann eine bessere Inspektion der Rohrleitung realisiert werden, da entsprechende Sensoren zur Inspektion der Rohrleitung besser an die Rohrleitung herangeführt bzw. besser relativ zur Rohrleitung ausgerichtet werden können.

Es ist im Rahmen der vorliegenden Erfindung ferner vorstellbar, dass wenigstens zwei Teilglieder wenigstens eines Inspektionsarms über wenigstens eine Gelenkverbindung, insbesondere über ein Drehgelenk und/oder Kugelgelenk miteinander verbunden sind, sodass die Teilglieder zumindest abschnittsweise zueinander verschwenkbar sind. Dabei kann die Schwenkachse vorzugsweise parallel oder im Wesentlichen parallel zu der Längserstreckung wenigstens eines Teilglieds ausgebildet sein. Zusätzlich oder alternativ kann die Schwenkachse vorzugsweise orthogonal oder im Wesentlichen orthogonal zu der Längserstreckung wenigstens eines Teilglieds ausgebildet sein. Besonders bevorzugt kann die Gelenkverbindung zwischen wenigstens zwei Teilgliedern wenigstens einen rotatorischen Freiheitsgrad, insbesondere wenigstens zwei, bevorzugt drei, rotatorische Freiheitsgrade aufweisen. Durch mehrere rotatorische Freiheitsgrade wird eine flexiblere Bewegung des Inspektionsarms und eine einfachere sowie genauere und flexiblere Positionierung wenigstens eines Sensorelements relativ zu der Rohrleitung ermöglicht. Wenigstens eine Gelenkverbindung kann dabei als ein Schwenkantrieb ausgebildet sein.

Insbesondere ist in diesem Zusammenhang denkbar, dass wenigstens ein Schwenkantrieb zumindest abschnittsweise in wenigstens ein Teilglied integriert ist. Hierdurch ergibt sich ein kompakter Aufbau des Inspektionsarms.

Es kann ferner vorgesehen sein, dass wenigstens ein Teilglied wenigstens eines Inspektionsarms einen Einstellmechanismus umfasst, wobei über den Einstellmechanismus eine Länge des Teilglieds zumindest abschnittsweise veränderbar ist. Insbesondere bezeichnet die Länge dabei eine Erstreckung des Teilglieds von einem vorgelagerten Teilglied zu einem nachgelagerten Teilglied und/oder von einem Ende des betreffenden Teilglieds zu dem Trägerelement. Wenigstens ein Einstellmechanismus kann bspw. als ein Scherentrieb ausgebildet sein. Zusätzlich oder alternativ kann wenigstens ein Einstellmechanismus als eine Gelenkverbindung, umfassend wenigstens ein Schubgelenk oder Drehschubgelenk, ausgebildet sein. Insbesondere kann wenigstens ein Einstellmechanismus als ein Teleskopmechanismus und/oder als ein Hubantrieb ausgebildet sein. Durch eine veränderbare Länge wenigstens eines Teilglieds ergibt sich eine flexiblere Einsetzbarkeit des Inspektionsarms, was wiederum eine einfachere und ortsunabhängigere Inspektion der Rohrleitung ermöglicht.

In Bezug auf die vorliegende Erfindung ist es vorstellbar, dass an wenigstens einem Inspektionsarm, insbesondere an wenigstens einem Teilglied des Inspektionsarms, wenigstens ein Gewichtselement zur Stabilisierung einer Schwerpunktlage der Vorrichtung und/oder des Inspektionsarms bzw. Teilglieds angeordnet ist. Eine Bewegung der Inspektionseinheit relativ zu dem Trägerelement führt zu einer Verschiebung des Gesamtschwerpunkts der Inspektionsvorrichtung. Eine solche Verschiebung kann in einem gewissen Rahmen akzeptabel sein. Größere Verschiebungen der Schwerpunktlage zu einer Seite der Inspektionsvorrichtung können jedoch negative Auswirkungen haben. So kann im Extremfall die Inspektionsvorrichtung kippen und von der Rohrleitung fallen. Durch die Anordnung wenigstens eines Gewichtselements an wenigstens einem Inspektionsarm kann die Inspektionsvorrichtung weniger anfällig gegen Schwerpunktänderungen gemacht werden. Insbesondere kann wenigstens ein Gewichtselement an dem Teilglied des Inspektionsarms angeordnet sein, welches mit dem Trägerelement verbunden ist.

Ferner kann es vorteilhaft vorgesehen sein, wenn wenigstens ein Gewichtselement zur Stabilisierung einer Schwerpunktlage an wenigstens einem Inspektionsarm, insbesondere an wenigstens einem Teilglied des Inspektionsarms, beweglich gelagert ist, sodass das Gewichtselement zumindest abschnittsweise entlang des Inspektionsarms, insbesondere entlang der Länge des Teilglieds, bewegbar ist. Die bewegliche Lagerung wenigstens eines Gewichtselements kann bspw. über wenigstens eine, insbesondere an dem Inspektionsarm bzw. dem Teilglied angeordnete, Führungskulisse realisiert sein, wobei vorzugsweise das Gewichtselement zumindest abschnittsweise formschlüssig in der Führungskulisse aufgenommen ist und/oder zumindest abschnittsweise entlang der Führungskulisse verschiebbar ist. Wenigstens eine Führungskulisse kann zumindest abschnittsweise als ein L-Profil und/oder U-Profil ausgebildet sein. Das Gewichtselement kann manuell entlang der Führungskulisse verschiebbar sein. Auch kann die bewegliche Lagerung über einen Linearantrieb, insbesondere einen Spindeltrieb realisiert werden. So kann das Gewichtselement durch Ansteuerung des Linearantriebs in der Führungskulisse verschoben und in seiner Position verändert werden. Durch eine Verschiebung des Gewichtselements kann aktiv Einfluss auf die Schwerpunktlage des Inspektionsarms bzw. Teilglieds und somit der Inspektionsvorrichtung genommen werden. Auch kann das Gewichtselement dazu verwendet werden, an einzelnen Teilgliedern ein Drehmoment zu erzeugen und ein zur Verschwenkung des Teilglieds, insbesondere durch einen Schwenkantrieb, aufzubringendes Drehmoment zu reduzieren. Bspw. kann das Gewichtselement ein Gegengewicht zu einem Inspektionskopf bilden. Zusätzlich oder alternativ kann wenigstens ein Feststellmittel vorgesehen sein, um wenigstens ein Gewichtselement in seiner Position zumindest temporär festzulegen. Das Feststellmittel kann bspw. als eine Schraube ausgebildet sein. Auch kann im Falle eines Linearantriebs, der Linearantrieb, wie oben beschrieben, durch wenigstens einen selbsthemmenden Aktuator als Feststellmittel wirken.

Im Rahmen der Erfindung kann es von Vorteil sein, dass wenigstens eine Steuereinheit zur zumindest teilweisen Steuerung der Inspektionsvorrichtung umfasst ist. Die Steuereinheit kann vorzugsweise an dem Trägerelement angeordnet sein. Die Steuereinheit kann dazu ausgebildet sein, mit wenigstens einem Sensorelement zumindest temporär in eine, insbesondere bidirektionale, Kommunikationsverbindung bzw. Signalverbindung bringbar zu sein. Hierdurch können durch die Sensorelemente erfasste Sensordaten durch die Steuereinheit abgefragt und/oder empfangen und/oder weiterverarbeitet werden. Ferner kann die Steuereinheit dazu ausgebildet sein, mit wenigstens einem Antrieb zumindest temporär in eine, insbesondere bidirektionale, Kommunikationsverbindung bzw. Signalverbindung bringbar zu sein. Hierdurch kann der betreffende Antrieb von der Steuereinheit angesteuert und insbesondere in Bewegung versetzt oder angehalten werden. Eine Kommunikation zwischen einer Steuereinheit und wenigstens einem Sensorelement und/oder Antrieb kann vorzugsweise kabelgebunden erfolgen. Hierdurch kann ein einfacher Aufbau sowie eine zuverlässige Verbindung erzielt werden.

Wenigstens eine Steuereinheit kann dazu ausgebildet sein, zumindest temporär in eine, insbesondere bidirektionale, Kommunikations- bzw. Signalverbindung mit wenigstens einem mobilen Gerät gebracht zu werden. Das mobile Gerät kann vorzugsweise eine Fernsteuerung sein, wobei insbesondere durch die Fernsteuerung Steuersignale zur Steuerung der Inspektionsvorrichtung erzeugbar sind. So kann die Inspektionsvorrichtung über die Fernsteuerung gesteuert werden. Die Steuerung kann bspw. eine Fortbewegung der Inspektionsvorrichtung und/oder die Ansteuerung von Antrieben zur Ausrichtung einzelner Komponenten der Inspektionsvorrichtung, insbesondere der Antriebseinheit und/oder wenigstens eines Führungsrads und/oder wenigstens einer Inspektionseinheit, und/oder die Steuerung einer Markierungseinheit und/oder die Steuerung einer Werkzeugeinheit betreffen.

Wenigstens eine Steuereinheit kann wenigstens eine Kommunikationsschnittstelle umfassen. Bei der Kommunikationsschnittstelle kann es sich vorzugsweise um eine drahtlose Kommunikationsschnittstelle, insbesondere eine Funkschnittstelle, handeln. Über die Kommunikationsschnittstelle können bspw. Steuersignale von dem mobilen Gerät empfangen werden. Zusätzlich oder alternativ können Sensordaten oder Statusinformationen von der Inspektionsvorrichtung an das mobile Gerät übertragen werden. Bspw. können Bilddaten eines Bildsensors übertragen werden und vorzugsweise einem Anzeigemittel des mobilen Geräts angezeigt werden. So kann ein Benutzer an dem mobilen Gerät einen Inspektionsvorgang besser überwachen und steuern.

Ferner kann wenigstens eine Steuereinheit vorzugsweise Mittel zur Datenverarbeitung, insbesondere wenigstens einen Prozessor und/oder wenigstens einen, vorzugsweise persistenten, Datenspeicher und/oder wenigstens einen Arbeitsspeicher umfassen.

Es kann ferner vorgesehen sein, dass wenigstens eine Energieversorgungseinheit umfasst ist, wobei die Energieversorgungseinheit dazu ausgebildet ist, die Inspektionsvorrichtung, insbesondere wenigstens ein Sensorelement und/oder wenigstens einen Antrieb und/oder wenigstens eine Markierungseinheit und/oder wenigstens eine Werkzeugeinheit, mit, vorzugsweise elektrischer, Energie zu versorgen. Die Energieversorgungseinheit kann wenigstens ein Batteriefach und/oder wenigstens einen Akkumulator umfassen. Hierdurch kann die Mobilität und Flexibilität der Inspektionsvorrichtung erhöht werden. Zusätzlich oder alternativ kann die Energieversorgungseinheit wenigstens einen Netzanschluss zur Herstellung einer kabelgebundenen Energieversorgung umfassen. Hierdurch wird der Vorteil einer längeren Einsatzzeit der Inspektionsvorrichtung erzielt.

Alternativ oder zusätzlich zu einer Steuerung der Inspektionsvorrichtung durch ein mobiles Gerät, kann die Steuereinheit dazu ausgebildet sein, vordefinierte Befehle, insbesondere in einer vorgegebenen Reihenfolge, auszuführen. Diese Befehle können bspw. eine vordefinierte Bewegung der Inspektionsvorrichtung, insbesondere der Antriebseinheit und/oder Inspektionseinheit, umfassen. Zusätzlich oder alternativ können diese Befehle eine Erfassung und/oder Übermittlung und/oder Speicherung von Sensordaten umfassen. Zusätzlich oder alternativ können diese Befehle eine, insbesondere ereignisabhängige, Ansteuerung wenigstens einer Markierungseinheit und/oder Werkzeugeinheit umfassen. Hierzu kann vorgesehen sein, dass ein Computerprogramm mit entsprechenden Befehlen in einem Speicher der Steuereinheit hinterlegbar und durch die Steuereinheit ausführbar ist. So kann die Inspektionsvorrichtung bspw. einen zumindest teilweise automatisierten Inspektionsprozess durchführen.

Die obenstehende Aufgabe wird ferner gelöst durch ein erfindungsgemäßes Inspektionssystem zur Inspektion wenigstens einer Rohrleitung, umfassend wenigstens eine Inspektionsvorrichtung, sowie wenigstens ein mobiles Gerät, insbesondere wenigstens eine oder genau eine Fernsteuerung, wobei das mobile Gerät und die Inspektionsvorrichtung zumindest temporär in eine, insbesondere bidirektionale, Kommunikationsverbindung bringbar sind, sodass die Inspektionsvorrichtung zumindest teilweise durch das mobile Gerät steuerbar ist.

Die obenstehende Aufgabe wird ferner gelöst durch ein erfindungsgemäßes Verfahren zur Inspektion wenigstens einer Rohrleitung mit einer Inspektionsvorrichtung nach einem der Ansprüche 1 bis 11, wobei die Inspektionsvorrichtung auf wenigstens einer Rohrleitung angeordnet ist, wobei wenigstens die folgenden Schritte, vorzugsweise in der angegebenen Reihenfolge, durchgeführt werden:
- Befahren wenigstens eines Abschnitts der Rohrleitung durch eine Basiseinheit der Inspektionsvorrichtung,
- Inspizieren wenigstens eines Abschnitts der Rohrleitung durch eine Inspektionseinheit der Inspektionsvorrichtung.

Die obenstehende Aufgabe wird ferner gelöst durch ein erfindungsgemäßes Computerprogrammprodukt. Durch das Computerprogrammprodukt ergeben sich die gleichen Vorteile, wie sie bereits in Bezug auf die Inspektionsvorrichtung, das Inspektionssystem und/oder das Verfahren beschrieben worden sind.

Die obenstehende Aufgabe wird ferner gelöst durch ein erfindungsgemäßes computerlesbares Speichermedium, auf dem ein erfindungsgemäßes Computerprogrammprodukt, insbesondere ein Computerprogrammprodukt nach Anspruch 14 gespeichert ist. Durch das Speichermedium ergeben sich die gleichen Vorteile, wie sie bereits in Bezug auf die Inspektionsvorrichtung, das Inspektionssystem, das Verfahren und/oder das Computerprogrammprodukt beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt
Fig. 1 eine schematische Abbildung einer Inspektionsvorrichtung,
Fig. 2 eine schematische Abbildung einer Inspektionsvorrichtung,
Fig. 3 eine schematische Abbildung einer Inspektionsvorrichtung,
Fig. 4 eine schematische Abbildung einer Inspektionsvorrichtung,
Fig. 5 eine schematische Abbildung einer Inspektionsvorrichtung,
Fig. 6 eine schematische Abbildung einer Inspektionsvorrichtung,
Fig. 7 eine schematische Abbildung eines Trägerelements,
Fig. 8 eine schematische Abbildung eines Inspektionskopfes,
Fig. 9 eine schematische Abbildung eines Inspektionsarms,
Fig. 10 eine schematische Abbildung eines Inspektionssystems und
Fig: 11 eine schematische Abbildung eines Verfahrens,
Fig. 12 eine schematische Abbildung eines Inspektionskopfes und
Fig. 13eine schematische Abbildung eines Inspektionskopfes.

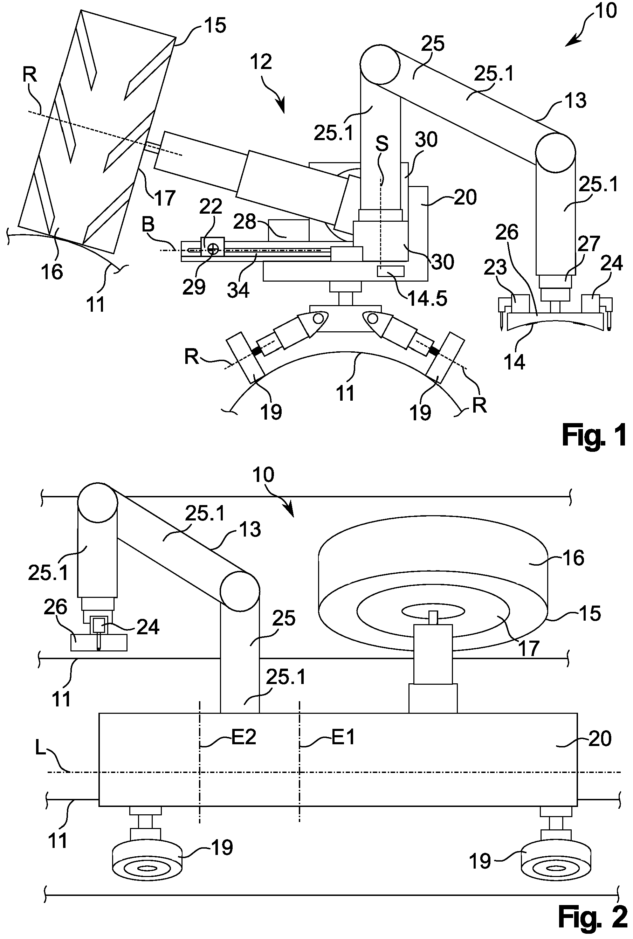

Fig. 1 zeigt eine schematische Abbildung einer Inspektionsvorrichtung 10 zur Inspektion wenigstens einer Rohrleitung 11 in einer Frontalansicht. Dabei ist die Blickrichtung entlang der Längserstreckung L des Trägerelements 20 gerichtet. Fig. 2 zeigt ebenfalls eine schematische Abbildung einer Inspektionsvorrichtung 10, allerdings in einer Seitenansicht. Dabei ist die Blickrichtung in Fig. 2 orthogonal zu der Längserstreckung L des Trägerelements 20 gerichtet. Die nachfolgende Beschreibung verschiedener Merkmale der Erfindung erfolgt unter gleichzeitiger Bezugnahme auf die Fig. 1 und 2.

Die Inspektionsvorrichtung 10 umfasst eine Basiseinheit 12 sowie eine Inspektionseinheit 13. Die Inspektionseinheit 13 umfasst ferner wenigstens ein Sensorelement 14 zur Inspektion der Rohrleitung 11. Ferner umfasst die Basiseinheit 12 eine Antriebseinheit 15. Die Antriebseinheit 15 umfasst ein Antriebsrad 16 sowie einen Antrieb 17, wobei der Antrieb 17 derart mit dem Antriebsrad 16 in Wirkverbindung steht, dass das Antriebsrad 16 durch den Antrieb 17 antreibbar ist.

Die Basiseinheit 12 umfasst ferner ein Trägerelement 20 sowie wenigstens ein Führungsrad 19 zur Führung der Inspektionsvorrichtung 10 auf einer Rohrleitung 11. Die Inspektionseinheit 13 wird von dem Trägerelement 20 getragen bzw. ist an dem Trägerelement 20 angeordnet. Die Rotationsachse R des Antriebsrads 16 ist zu der Rotationsachse R wenigstens eines Führungsrads 19 geneigt orientiert.

Durch die vorgeschlagene Inspektionsvorrichtung 10 ergibt sich der Vorteil, dass durch die Inspektionseinheit 13 einerseits eine zuverlässige Inspektion der Rohrleitung 11 durchführbar ist und durch die Basiseinheit 12 andererseits eine sichere und zuverlässige Fortbewegung der Inspektionsvorrichtung 10 entlang und/oder auf der Rohrleitung 11 realisierbar ist. Insbesondere durch die Kombination wenigstens eines Antriebsrads 16 und wenigstens eines Führungsrads 19 sowie der Neigung des Antriebsrads 16 zu wenigstens einem Führungsrad 19 ergibt sich eine flexible und sichere Positionierung der Inspektionsvorrichtung 10 auf wenigstens einer Rohrleitung 11 sowie gleichzeitig eine zuverlässige Abstützung der Inspektionsvorrichtung 10 auf wenigstens einer weiteren Oberfläche sowie ein zuverlässiger Vortrieb der Inspektionsvorrichtung 10.

Vorliegend ist das Trägerelement 20 mit den Führungsrädern 19 auf einer ersten Rohrleitung 11 positioniert. Die Abstützung der Inspektionsvorrichtung 10 erfolgt ferner über das Antriebsrad 16 auf einer weiteren Rohrleitung 11. Alternativ könnte sich das Antriebsrad 16 jedoch auch auf einer alternativen Oberfläche, insbesondere einer Wandfläche abstützen. Über den Antrieb 17 kann ein Drehmoment auf das Antriebsrad 16 übertragen und so ein Vortrieb für die Inspektionsvorrichtung 10 erzeugt werden. Die Führungsräder 19 sorgen ferner für eine sichere und zuverlässige Bewegung der Inspektionsvorrichtung 10 entlang der Rohrleitung 11. Ferner kann durch die Inspektionseinheit 13 eine Inspektion der Rohrleitung 11 unter Verwendung wenigstens eines Sensorelements 14 durchgeführt werden.

Der Antrieb 17 ist vorliegend als ein Radnabenmotor ausgebildet und bildet eine Radnabe des Antriebsrads 16 aus. Ferner umfasst das Antriebsrad 16 einen Reifen, welcher die äußere Oberfläche des Antriebsrads 16 ausbildet. Gemäß Fig. 1 kann der Reifen profiliert sein. Hierdurch ergibt sich eine verbesserte Traktion des Antriebsrads 16, insbesondere auf nassen Oberflächen. Alternativ kann der Reifen auch wie in Fig. 2 dargestellt ohne Profilierung ausgebildet sein. Profilfreie Reifen haben sich als besonders vorteilhaft in Bezug eine Verwendung auf trockenen Oberflächen gezeigt.

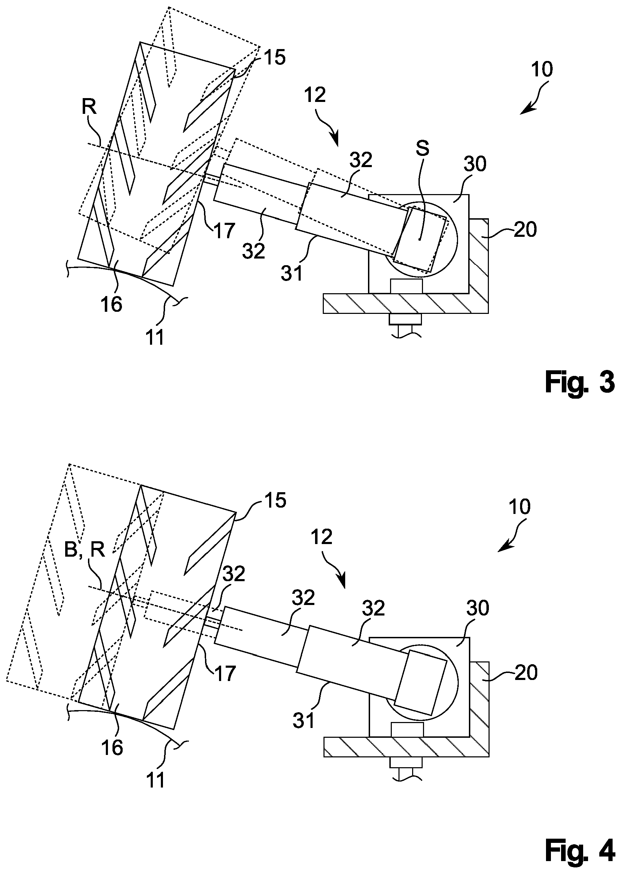

Fig. 3 und Fig. 4 zeigen ferner eine schematische Ansicht einer Inspektionsvorrichtung 10, wobei die zugehörige Schnittebene E1 in Fig. 2 gekennzeichnet ist. Es wird aus Fig. 1 und 3 ersichtlich, dass die Antriebseinheit 15 und das Trägerelement 20 über wenigstens eine Gelenkverbindung verbunden sind, sodass die Antriebseinheit 15 relativ zu dem Trägerelement 20 zumindest abschnittsweise verschwenkbar ist. Die Verschwenkung der Antriebseinheit 15 relativ zu dem Trägerelement 20 ist schematisch in Fig. 3 dargestellt. Hierzu ist wenigstens eine Gelenkverbindung zur Verbindung der Antriebseinheit 15 mit dem Trägerelement 20 als ein Drehgelenk 33 ausgebildet. Das Drehgelenk 33 wird vorliegend durch einen Schwenkantrieb 30 ausgebildet, durch den eine Schwenkbewegung der Antriebseinheit 15 relativ zu dem Trägerelement 20 durchführbar ist. Dabei ist die Schwenkachse S parallel oder im Wesentlichen parallel zu der Längserstreckung L des Trägerelements 20 und orthogonal oder im Wesentlichen orthogonal zu der Rotationsachse R des Antriebsrads 16 orientiert.

Ferner wird aus Fig. 1 und 4 ersichtlich, dass die Antriebseinheit 15 und das Trägerelement 20 ferner über wenigstens eine Gelenkverbindung verbunden sind, sodass ein lateraler Abstand zwischen der Antriebseinheit 15 und dem Trägerelement 20 zumindest abschnittsweise veränderbar ist. Hierzu ist die Antriebseinheit 15 über die Gelenkverbindung relativ zu dem Trägerelement 20 entlang einer linearen Bewegungsachse B verschiebbar, wobei die Bewegungsachse B parallel oder im Wesentlichen parallel zu der Rotationsachse R des Antriebsrads 16 und orthogonal oder im Wesentlichen orthogonal zu der Längserstreckung L des Trägerelements 20 orientiert ist. Die Gelenkverbindung zur Veränderung eines Abstandes zwischen der Antriebseinheit 15 und dem Trägerelement 20 ist vorliegend über einen Hubantrieb 31 realisiert, wobei der Hubantrieb 31 als ein Teleskopantrieb ausgebildet ist und insbesondere wenigstens ein Schubgelenk umfasst.

Es wird aus Fig. 1 und 4 ersichtlich, dass der Hubantrieb 31 mehrere Teleskopelemente 32 umfasst, welche zumindest abschnittsweise ineinander anordbar sind und relativ zueinander bewegbar sind, um eine Länge einzustellen. Dabei ist in Fig. 4 im Vergleich zu Fig. 3 ein drittes Teleskopelement 32 ausgefahren, um den Abstand zwischen der Antriebseinheit 15 und dem Trägerelement 20 entsprechend zu vergrößern. Ein Teleskopantrieb im Sinne der vorliegenden Erfindung kann wenigstens zwei, wenigstens drei, wenigstens vier oder mehr Teleskopelemente 32 umfassen.

Sowohl der Schwenkantrieb 30 als auch der Hubantrieb 31 sind als selbsthemmende Antriebe 30, 31 ausgebildet bzw. umfassen wenigstens einen selbsthemmenden Aktuator. Dies bietet den Vorteil, dass lediglich im Zuge einer Bewegung des jeweiligen Antriebs 30 31 Energie aufgewendet werden muss. Anschließend wird die eingestellte Position des betreffenden Antriebs 30, 31 durch die Selbsthemmung und ohne weitere Energiezufuhr zuverlässig gehalten.

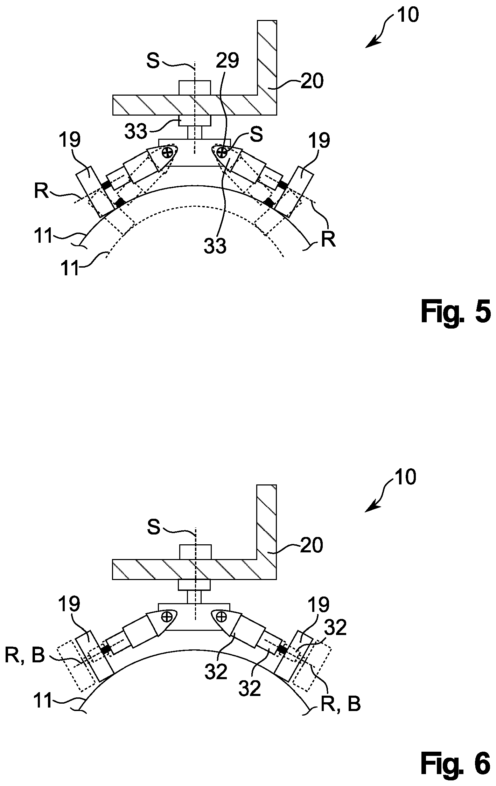

Fig. 5 und Fig. 6 zeigen ferner eine schematische Ansicht einer Inspektionsvorrichtung 10, wobei die zugehörige Schnittebene E2 in Fig. 2 gekennzeichnet ist. Es wird aus Fig. 1 und 5 ersichtlich, dass wenigstens ein Führungsrad 19 und das Trägerelement 20 über wenigstens eine Gelenkverbindung miteinander verbunden sind, sodass das Führungsrad 19 relativ zu dem Trägerelement 20 zumindest abschnittsweise verschwenkbar ist. Die Verschwenkung wenigstens eines Führungsrads 19 relativ zu dem Trägerelement 20 ist schematisch in Fig. 5 dargestellt. Hierzu ist wenigstens eine Gelenkverbindung zur Verbindung der Antriebseinheit 15 mit dem Trägerelement 20 als ein Drehgelenk 33 ausgebildet ist. Dabei ist die Schwenkachse S orthogonal oder im Wesentlichen parallel zu der Rotationsachse R des Führungsrads 19 orientiert. Es wird aus Fig. 5 ersichtlich, dass hierdurch bei Rohrleitungen 11 mit unterschiedlichen Rohrleitungsdurchmessern, auf denen die Inspektionsvorrichtung 10 positioniert wird, stets eine sichere Auflage des Führungsrads19 auf der Rohroberfläche und so eine zuverlässige Führung der Inspektionsvorrichtung 10 durch ein oder mehrere Führungsräder 19 realisiert werden.

Es wird aus Fig. 5 ferner ersichtlich, dass wenigstens eine Gelenkverbindung, vorliegend wenigstens ein Drehgelenk 33, wenigstens ein Feststellmittel 29 umfasst. Durch das Feststellmittel 29 kann eine Ausrichtung der über die Gelenkverbindung beweglich verbundenen Komponenten, vorliegend dem Führungsrad 19 und dem Trägerelement 20, zumindest temporär fixiert werden. Das Feststellmittel 29 ist vorliegend als eine Schraube ausgebildet, welche zugleich die Schwenkachse S des Drehgelenks 33 ausbildet. Die Verwendung eines Feststellmittels 29 ist auch bei anderen Arten von Gelenkverbindungen denkbar. So kann bspw. bei einem Teleskopmechanismus die Position von zwei Teleskopelementen 32 relativ zueinander bspw. durch eine in das äußere Teleskopelement 32 einschraubbare Madenschraube realisiert werden.

Aus Fig. 1 und 6 wird ferner ersichtlich, dass wenigstens ein Führungsrad 19 und das Trägerelement 20 ferner über wenigstens eine Gelenkverbindung verbunden sind, sodass ein Abstand zwischen dem Führungsrad 19 und dem Trägerelement 20 zumindest abschnittsweise veränderbar ist. Hierzu ist das Führungsrad 19 über die Gelenkverbindung relativ zu dem Trägerelement 20 entlang einer linearen Bewegungsachse B verschiebbar, wobei die Bewegungsachse B parallel oder im Wesentlichen parallel zu der Rotationsachse R des Führungsrads 19 orientiert ist. Durch eine Variabilität des Abstandes zwischen wenigstens einem Führungsrad 19 und Trägerelement 20 ergibt sich insgesamt der Vorteil einer flexibleren Ausrichtung des Führungsrads 19 bzw. der Führungsräder 19. Insbesondere kann eine Spurbreite der Inspektionsvorrichtung 10 an örtlich abweichende Rohrleitungsdurchmesser angepasst werden. Die Gelenkverbindung umfasst wenigstens ein Schubgelenk. Die Gelenkverbindung zur Veränderung eines Abstandes zwischen dem Führungsrad 19 und dem Trägerelement 20 ist vorliegend als ein Teleskopmechanismus ausgebildet, wobei der Teleskopmechanismus mehrere Teleskopelemente 32 umfasst.

Optional kann vorgesehen sein, dass auch wenigstens eine Gelenkverbindung zwischen wenigstens einem Führungsrad 19 und dem Trägerelement 20 durch einen Antrieb, insbesondere einen Hubantrieb 31 und/oder Schwenkantrieb 30, ausgebildet wird. Hierdurch kann ein höherer Grad der Automatisierung der Inspektionsvorrichtung 10 realisiert werden.

Aus Fig. 1 und 2 sowie 5 und 6 wird ferner ersichtlich, dass an dem Trägerelement 20 wenigstens ein Paar von Führungsrädern 19 angeordnet ist, wobei das Paar von Führungsrädern 19 zwei Führungsräder 19 umfasst, wobei beide Führungsräder 19 des Paares von Führungsrädern 19 an einer in Bezug auf eine Längserstreckung L des Trägerelements 20 gleichen oder im Wesentlichen gleichen Position angeordnet sind. Hierdurch ergibt sich eine sicherere und zuverlässigere Positionierung der Inspektionsvorrichtung 10 auf der Rohrleitung 11 sowie darüber hinaus eine bessere Führung der Inspektionsvorrichtung 10 auf bzw. entlang der Rohrleitung 11 durch die Führungsräder 19.

Aus Fig. 1, 5 und 6 wird ferner ersichtlich, dass wenigstens ein Paar von Führungsrädern 19 an dem Trägerelement 20 schwenkbar gelagert ist, sodass das Paar von Führungsrädern 19 zumindest abschnittsweise relativ zu dem Trägerelement 20 verschwenkbar ist, wobei die Schwenkachse S orthogonal oder im Wesentlichen orthogonal zu der Längserstreckung L des Trägerelements 20 entlang einer vertikalen Richtung orientiert ist. Hierdurch ergibt sich der Vorteil, dass an dem Paar von Führungsrädern 19 ein Lenkeinschlag vorgenommen werden kann. Hierdurch kann eine verbesserte Führung der Inspektionsvorrichtung 10 auf und/oder entlang der Rohrleitung 11 realisiert werden.

Aus Fig. 1 wird ferner ersichtlich, dass an dem Trägerelement 20 wenigstens ein Gewichtselement 22 zur Stabilisierung einer Schwerpunktlage der Inspektionsvorrichtung 10 angeordnet ist. Hierdurch kann die Anfälligkeit der Inspektionsvorrichtung 10 gegen Schwerpunktänderungen aufgrund einer Bewegung der Antriebseinheit 15 und/oder der Inspektionseinheit 13 verringert werden. Das Gewichtselement 22 ist vorliegend zwischen dem Antriebsrad 16 und dem Trägerelement 20 angeordnet.

Das Gewichtselement 22 zur Stabilisierung der Schwerpunktlage der Inspektionsvorrichtung 10 ist ferner an dem Trägerelement 20 beweglich gelagert, sodass ein Abstand zwischen dem Gewichtselement 22 und dem Trägerelement 20 zumindest abschnittsweise linear veränderbar ist. Dabei ist die Bewegungsachse B, entlang derer das Gewichtselement 22 verschiebbar ist, orthogonal oder im Wesentlichen orthogonal zu der Längserstreckung L des Trägerelements 20 orientiert.

Die bewegliche Lagerung des Gewichtselements 22 ist vorliegend über eine Führungskulisse 34 realisiert, wobei das Gewichtselement 22 zumindest abschnittsweise formschlüssig in der Führungskulisse 34 aufgenommen ist und zumindest abschnittsweise entlang der Führungskulisse 34 verschiebbar ist. Durch eine Verschiebung des Gewichtselements 22 kann aktiv Einfluss auf die Schwerpunktlage der Inspektionsvorrichtung 10 genommen werden. Insbesondere kann durch eine Verschiebung des Gewichtselements 22 ein durch das Gewichtselement 22 erzeugtes Moment zur Stabilisierung der Inspektionsvorrichtung 10 variiert werden. So kann die Wirkung vergleichsweise leichter Gewichtselements 22 verbessert und das Gesamtgewicht der Inspektionsvorrichtung 10 gering gehalten werden.

Vorliegend ist das Gewichtselement 22 manuell verschiebbar. Alternativ kann die bewegliche Lagerung jedoch auch über einen Linearantrieb, insbesondere Spindeltrieb, realisiert werden. Hierdurch kann eine automatisierbare bzw. fernsteuerbare Bewegbarkeit des Gewichtselement 22 sowie eine stufenlose Einstellbarkeit der Position des Gewichtselements 22 realisiert werden.

Ferner ist wenigstens ein Feststellmittel 29 vorgesehen, um das Gewichtselement 22 in seiner Position relativ zu dem Trägerelement 20 zumindest temporär festzulegen. Das Feststellmittel 29 ist vorliegend als eine Schraube ausgebildet, welche zumindest abschnittsweise durch das Gewichtselement 22 und eine in der Führungskulisse 34 ausgebildete Aussparung greift, welche vorliegend als Langloch ausgebildet ist, und so von der anderen Seite der Führungskulisse 34 bspw. mit einer Mutter gekontert werden kann. Alternativ könnten auch kreisrunde Aussparungen in der Führungskulisse 34 ausgebildet sein, in welchen ein Gewinde ausgebildet sein kann, um das Gewichtselement 22 in diskreten Positionen entlang der Führungskulisse 34 festzulegen.

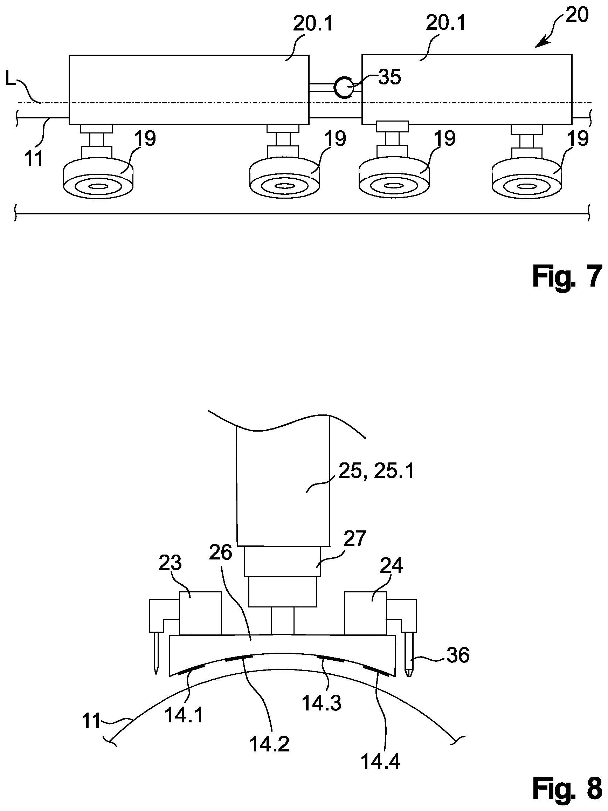

Fig. 7 zeigt ferner eine schematische Ansicht eines Trägerelements 20. Auf dem Trägerelement 20 könnten in vergleichbarer Weise zu Fig. 1 und 2 eine Antriebseinheit 15 und/oder eine Inspektionseinheit 13 angeordnet sein.

Das Trägerelement 20 der Fig. 17 umfasst wenigstens zwei Teilglieder 20.1, wobei die Teilglieder 20.1 über wenigstens eine Gelenkverbindung miteinander verbunden sind, sodass die Teilglieder 20.1 zumindest abschnittsweise relativ zueinander verschwenkbar sind. Vorliegend ist die Gelenkverbindung durch ein Kugelgelenk 35 ausgebildet. Um das Fahrverhalten der Inspektionsvorrichtung 10 auf bzw. entlang der Rohrleitung 11 zu verbessern sind ferner an jedem Teilglied 20.1 jeweils wenigstens zwei Führungsräder 19, vorliegend jeweils wenigstens zwei Paare von Führungsrädern 19, angeordnet.

Es wird ferner aus Fig. 1 ersichtlich, dass an der Inspektionsvorrichtung 10 wenigstens ein Abstandssensor 14.5 zur frühzeitigen Detektion einer Kollision der Inspektionsvorrichtung 10 umfasst ist. Der Abstandssensor 14.5 ist vorliegend an einem äußeren Rand des Trägerelements 20 angeordnet. Es können optional weitere Abstandssensoren 14.5, insbesondere an einem gegenüberliegenden Ende des Trägerelements 20, an der Inspektionseinheit 13, insbesondere an dem Inspektionsarm 25 und/oder Inspektionskopf 26, und/oder an der Antriebseinheit 15 vorgesehen sein.

Ferner ist durch die Inspektionsvorrichtung 10 wenigstens ein nicht dargestellter Positionssensor umfasst, welcher zur Bestimmung der Position der aktuellen Position der Inspektionsvorrichtung 10 ausgebildet ist. Der Positionssensor kann bspw. an dem Trägerelement 20 oder an der Inspektionseinheit 13, insbesondere dem Inspektionsarm 25, angeordnet sein.

Ferner ist durch die Inspektionsvorrichtung 10 wenigstens ein nicht dargestellter Wegstreckensensor umfasst. Der Wegstreckensensor ist vorliegend in die Antriebseinheit 15, insbesondere in den Antrieb 17 integriert und als inkrementeller Drehwinkelsensor zur Erfassung des Drehwinkels des Antriebsrads 16 ausgebildet.

Aus Fig. 1 und 2 wird ferner ersichtlich, dass die Inspektionseinheit 13 wenigstens einen Inspektionsarm 25 umfasst, wobei der Inspektionsarm 25 zumindest abschnittsweise relativ zu dem Trägerelement 20 bewegbar ist. Hierzu sind der Inspektionsarm 25 und das Trägerelement 20 über wenigstens eine Gelenkverbindung gelenkig miteinander verbunden. Durch eine Bewegbarkeit des Inspektionsarms 25 relativ zu dem Trägerelement 20 kann eine bessere Ausrichtung von Sensoren 14 relativ zu der Rohrleitung 11 realisiert werden, sodass eine entsprechend gründliche und zuverlässige Inspektion der Rohrleitung 11 durchführbar ist.

Der Inspektionsarm 25 und das Trägerelement 20 sind vorliegend über wenigstens eine Gelenkverbindung miteinander verbunden, sodass der Inspektionsarm 25 zumindest abschnittsweise relativ zu dem Trägerelement 20 verschwenkbar ist. Dabei ist die Schwenkachse S orthogonal oder im Wesentlichen orthogonal zu der Längserstreckung L des Trägerelements 20 orientiert. Die Gelenkverbindung zwischen dem Inspektionsarm 25 und dem Trägerelement 20 ist vorliegend als Schwenkantrieb 30 ausgebildet.

Der Inspektionsarm 25 umfasst vorliegend wenigstens zwei Teilglieder 25.1, wobei die Teilglieder 25.1 untereinander jeweils über Gelenkverbindungen miteinander verbunden sind, sodass die Teilglieder 25.1 zumindest abschnittsweise relativ zueinander verschwenkbar sind.

Aus Fig. 1 wird ferner ersichtlich, dass wenigstens ein Teilglied 25.1 des Inspektionsarms 25 einen Einstellmechanismus 27 umfasst, wobei durch den Einstellmechanismus 27 eine Länge des Teilglieds 25.1 zumindest abschnittsweise veränderbar ist. Der Einstellmechanismus 27 ist vorliegend als ein Teleskopmechanismus ausgebildet. Alternativ wäre jedoch bspw. auch eine Ausbildung als Scherenmechanismus bzw. Scherentrieb denkbar. Durch eine veränderbare Länge wenigstens eines Teilglieds 25.1 ergibt sich eine flexiblere Einsetzbarkeit des Inspektionsarms 25, was wiederum eine einfachere und ortsunabhängigere Inspektion der Rohrleitung 11 ermöglicht.

Aus Fig. 1 wird ferner ersichtlich, dass der Inspektionsarm 25 einen Inspektionskopf 26 umfasst. Der Inspektionskopf 26 ist in Fig. 8 schematisch dargestellt. Es wird aus Fig. 8 ersichtlich, dass der Inspektionskopf 26 zumindest abschnittsweise komplementär zu der Rohrleitung 11 ausgebildet ist.

An dem Inspektionskopf 26 sind vorliegend ferner mehrere Sensorelemente 14 angeordnet. Aus Fig. 8 wird ersichtlich, dass wenigstens ein Bildsensor 14.1, wenigstens ein Temperatursensor 14.2, wenigstens ein Leckagesensor 14.3 sowie wenigstens ein Isolationssensor 14.4 an dem Inspektionskopf 26 angeordnet sind. Entsprechend kann der Inspektionskopf 26 an der Oberfläche der Rohrleitung 11 durch den Inspektionsarm 25 entlanggeführt werden und unter Verwendung der Sensorelemente 14 eine Inspektion der Rohrleitung 11 durchführen.

Ferner umfasst der Inspektionskopf 26 vorliegend eine Markierungseinheit 23 zur Markierung einer Position an der Rohrleitung 11 sowie eine Werkzeugeinheit 24, wobei die Werkzeugeinheit 24 wenigstens ein Werkzeug 36 umfasst.

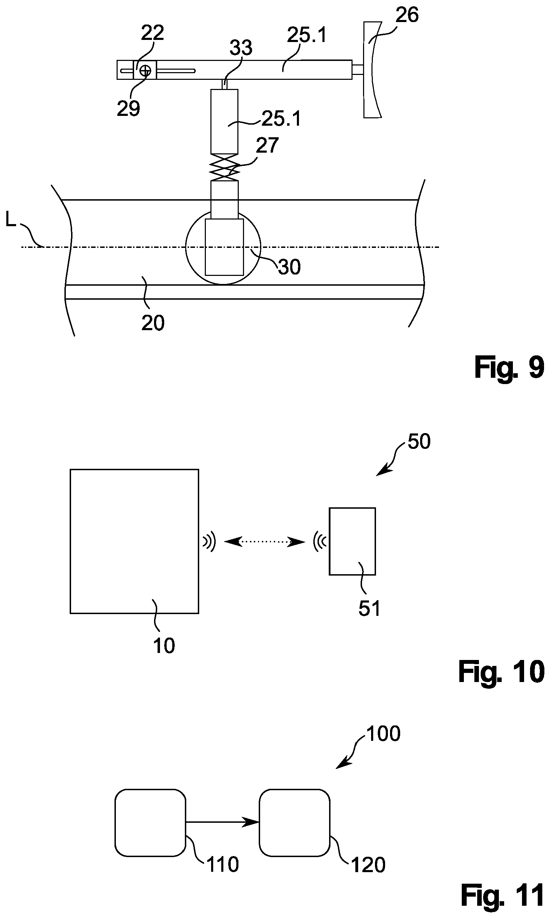

Fig. 9 zeigt eine Ausführungsform eines Inspektionsarms 25 in einer Draufsicht, wobei der Inspektionsarm 25 zwei Teilglieder 25.1 umfasst. Es wird aus Fig. 8 ferner ersichtlich, dass ein Teilglied 25.1 einen Einstellmechanismus 27 zur Veränderung einer Länge des Teilglieds 25.1 umfasst, wobei der Einstellmechanismus 27 als ein Scherentrieb ausgebildet ist. Die Teilglieder 25.1 des Inspektionsarms 25 sind über eine Gelenkverbindung, welche vorliegend als Drehgelenk 33 ausgebildet ist, schwenkbar miteinander verbunden. Der Inspektionskopf 26 ist lediglich schematisch dargestellt und kann bspw. wie in Fig. 8 ausgebildet sein.

Ferner wird aus Fig. 9 ersichtlich, dass an einem Teilglied 25.1 wenigstens ein Gewichtselement 22 zur Stabilisierung einer Schwerpunktlage des Teilglieds 25.1 des Inspektionsarms 25 angeordnet ist. Das Gewichtselement 22 ist zumindest abschnittsweise verschiebbar an dem Teilglied 25.1 angeordnet. Das Gewichtselement 22 kann vorliegend als Gegengewicht zum Inspektionskopf 26 verwendet werden. Hierdurch kann das Drehgelenk 33 dahingehend entlastet werden, dass ein hohes Drehmoment für eine Schwenkbewegung des Teilglieds 25.1 aufgebracht werden muss. Dies ist bspw. von Vorteil, wenn die Schwenkbewegung des einen Teilglieds 25.1 relativ zu dem anderen Teilglied 25.1 automatisiert, insbesondere durch einen Schwenkantrieb 30, ausgeführt wird.

Auch wird aus Fig. 1 ersichtlich, dass die Inspektionsvorrichtung 10 wenigstens eine Steuereinheit 28 zur zumindest teilweisen Steuerung der Inspektionsvorrichtung 10 umfasst.

Fig. 10 zeigt ferner eine schematische Ansicht eines Inspektionssystem 50 zur Inspektion wenigstens einer Rohrleitung 11, das Inspektionssystem 50 umfassend wenigstens eine Inspektionsvorrichtung 10 sowie wenigstens ein mobiles Gerät 51. Das mobile Gerät 51 ist als eine Fernsteuerung ausgebildet, wobei das mobile Gerät 51 und die Inspektionsvorrichtung 10 zumindest temporär in eine, insbesondere bidirektionale, Kommunikationsverbindung bringbar sind, sodass die Inspektionsvorrichtung 10 zumindest teilweise durch das mobile Gerät 51 steuerbar ist.

Fig. 11 zeigt ferner eine schematische Ansicht eines Verfahrens 100 zur Inspektion wenigstens einer Rohrleitung 11 mit einer Inspektionsvorrichtung 10, wobei die Inspektionsvorrichtung 10 auf wenigstens einer Rohrleitung 11 angeordnet ist und wobei wenigstens die folgenden Schritte durchgeführt werden:
- Befahren 110 wenigstens eines Abschnitts der Rohrleitung 11 durch die Inspektionsvorrichtung 10, insbesondere durch eine Basiseinheit 12 der Inspektionsvorrichtung 10,
- Inspizieren 120 wenigstens eines Abschnitts der Rohrleitung 11 durch die Inspektionsvorrichtung 10, insbesondere durch eine Inspektionseinheit 13 der Inspektionsvorrichtung 10.

Hierbei fällt nur das Verfahren 100 in der optionalen Variante der Kombination der Merkmale "durch eine Basiseinheit 12 der Inspektionsvorrichtung 10" und "durch eine Inspektionseinheit 13 der Inspektionsvorrichtung" in den Schutzbereich der Ansprüche.

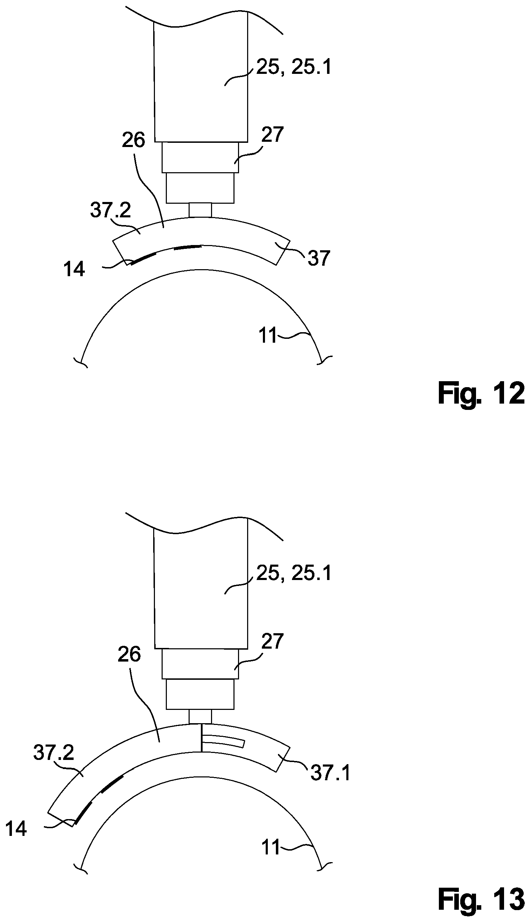

Fig. 12 und Fig. 13 zeigen ferner eine schematische Ansicht eines Inspektionskopfes 26. Der Inspektionskopf umfasst wenigstens ein Teilkreisteleskop 37, wobei durch das Teilkreisteleskop 37 wenigstens ein Sensorelement 14 zumindest abschnittsweise entlang des Umfangs bewegbar ist, wobei der Abstand zwischen dem Sensorelement 14 und der Rohroberfläche konstant bleibt.

Das Teilkreisteleskop umfasst wenigstens ein, insbesondere starres, Hauptelement 37.1 sowie wenigstens ein zu dem Hauptelement 37.1 bewegbares Teleskopelement 37.2 Dabei sind das Hauptelement 37.1 und das Teleskopelement 37.2 kreisbogenförmig bzw. bogenförmig ausgestaltet, sodass durch eine Bewegung des Teleskopelements 37.2 relativ zu dem Hauptelement 37.1 ein Umfang des Teilkreisteleskops 37 veränderbar ist.

### Bezugszeichenliste

- 10: Inspektionsvorrichtung
- 11: Rohrleitung
- 12: Basiseinheit
- 13: Inspektionseinheit
- 14: Sensorelement
- 14.1: Bildsensor
- 14.2: Temperatursensor
- 14.3: Leckagesensor
- 14.4: Isolationssensor
- 14.5: Abstandssensor
- 15: Antriebseinheit
- 16: Antriebsrad
- 17: Antrieb
- 19: Führungsrad
- 20: Trägerelement
- 20.1: Teilglied
- 22: Gewichtselement
- 23: Markierungseinheit
- 24: Werkzeugeinheit
- 25: Inspektionsarm
- 25.1: Teilglied
- 26: Inspektionskopf
- 27: Einstellmechanismus
- 28: Steuereinheit
- 29: Feststellmittel
- 30: Schwenkantrieb
- 31: Hubantrieb
- 32: Teleskopelement
- 33: Drehgelenk
- 34: Führungskulisse
- 35: Kugelgelenk
- 36: Werkzeug
- 37: Teilkreisteleskop
- 37.1: Hauptelement
- 37.2: Teleskopelement

- 50: Inspektionssystem
- 51: Mobiles Gerät

- 100: Verfahren
- 110: Befahren
- 120: Inspizieren

- B: Bewegungsachse
- E1: Schnittebene
- E2: Schnittebene
- L: Längserstreckung
- R: Rotationsachse
- S: Schwenkachse

## Patentansprüche

1. Inspektionsvorrichtung (10) zur Inspektion wenigstens einer Rohrleitung (11), umfassend eine Basiseinheit (12) sowie eine Inspektionseinheit (13),
wobei die Inspektionseinheit (13) wenigstens ein Sensorelement (14) zur Inspektion der Rohrleitung (11) umfasst
und wobei die Basiseinheit (12) eine Antriebseinheit (15) umfasst,
die Antriebseinheit (15) ferner umfassend wenigstens ein Antriebsrad (16) sowie wenigstens einen, insbesondere elektrischen, Antrieb (17),
wobei der Antrieb (17) derart mit dem Antriebsrad (16) in Wirkverbindung steht, dass das Antriebsrad (16) durch den Antrieb (17) antreibbar ist
und wobei die Basiseinheit (12) ferner ein Trägerelement (20)
sowie wenigstens ein Führungsrad (19) zur Führung der Inspektionsvorrichtung (10) entlang der Rohrleitung (11) umfasst,
wobei die Inspektionseinheit (13) zumindest teilweise durch das Trägerelement (20) getragen wird,
wobei das Führungsrad (19) an dem Trägerelement (20) angeordnet ist,
und wobei eine Rotationsachse (R) des Antriebsrads (16) zu einer Rotationsachse (R) wenigstens eines Führungsrads (19) geneigt orientiert ist,
**dadurch gekennzeichnet, dass**
an dem Trägerelement (20) wenigstens ein Gewichtselement (22) zur Stabilisierung einer Schwerpunktlage der Inspektionsvorrichtung (10) angeordnet ist, wobei das wenigstens eine Gewichtselement (22) zur Stabilisierung einer Schwerpunktlage der Inspektionsvorrichtung (10) an dem Trägerelement (20) beweglich gelagert ist, sodass ein Abstand zwischen dem Gewichtselement (22) und dem Trägerelement (20) zumindest abschnittsweise veränderbar ist.

2. Inspektionsvorrichtung (10) nach Anspruch 1,
**dadurch gekennzeichnet,**
**dass** die Antriebseinheit (15) und das Trägerelement (20) über wenigstens eine Gelenkverbindung miteinander verbunden sind, sodass die Antriebseinheit (15) relativ zu dem Trägerelement (20) zumindest abschnittsweise verschwenkbar ist und/oder sodass ein Abstand zwischen der Antriebseinheit (15) und dem Trägerelement (20) zumindest abschnittsweise, insbesondere linear, veränderbar ist.

3. Inspektionsvorrichtung (10) nach einem der vorhergehenden Ansprüche,
**dadurch gekennzeichnet,**
**dass** wenigstens ein Führungsrad (19) und das Trägerelement (20) über wenigstens eine Gelenkverbindung miteinander verbunden sind, sodass das Führungsrad (19) relativ zu dem Trägerelement (20) zumindest abschnittsweise verschwenkbar ist, und/oder sodass ein Abstand zwischen dem Führungsrad (19) und dem Trägerelement (20) zumindest abschnittsweise, insbesondere linear, veränderbar ist, und/oder
**dass** an dem Trägerelement (20) wenigstens ein Paar von Führungsrädern (19) angeordnet ist, wobei insbesondere das Paar von Führungsrädern (19) ein erstes Führungsrad (19) und ein zweites Führungsrad (19) umfasst, wobei das erste Führungsrad (19) und das zweite Führungsrad (19) des Paares von Führungsrädern (19) in Bezug auf eine Längserstreckung (L) des Trägerelements (20) an einer gleichen oder im Wesentlichen gleichen Position angeordnet sind.

4. Inspektionsvorrichtung (10) nach einem der vorhergehenden Ansprüche,
**dadurch gekennzeichnet,**
**dass** eine Rotationsachse (R) wenigstens eines Führungsrads (19) zu einer Rotationsachse (R) wenigstens eines weiteren Führungsrads (19) geneigt orientiert ist, wobei vorzugsweise der Neigungswinkel zwischen den Rotationsachsen (R) zwischen 30° und 170°, insbesondere zwischen 45° und 150°, vorzugsweise zwischen 60° und 130°, beträgt.

5. Inspektionsvorrichtung (10) nach einem der vorhergehenden Ansprüche,
**dadurch gekennzeichnet,**
**dass** an dem Trägerelement (20) wenigstens ein Gewichtselement (22) zur Stabilisierung einer Schwerpunktlage der Inspektionsvorrichtung (10) angeordnet ist, wobei wenigstens ein Gewichtselement (22) zur Stabilisierung einer Schwerpunktlage der Inspektionsvorrichtung (10) an dem Trägerelement (20) beweglich gelagert ist, sodass ein Abstand zwischen dem Gewichtselement (22) und dem Trägerelement (20) zumindest abschnittsweise linear veränderbar ist.

6. Inspektionsvorrichtung (10) nach einem der vorhergehenden Ansprüche,
**dadurch gekennzeichnet,**
**dass** das Trägerelement (20) wenigstens zwei Teilglieder (20.1) umfasst, wobei die Teilglieder (20.1) derart gelenkig miteinander verbunden sind, sodass die Teilglieder (20.1) zumindest abschnittsweise relativ zueinander verschwenkbar sind.

7. Inspektionsvorrichtung (10) nach einem der vorhergehenden Ansprüche,
**dadurch gekennzeichnet,**
**dass** durch die Inspektionseinheit (13) wenigstens eins der folgenden Sensorelemente (14) umfasst ist:
- Wenigstens ein Bildsensor (14.1) zur Erfassung von Bildern der Rohrleitung (11),
- wenigstens ein Temperatursensor (14.2) zur Erfassung der Temperatur der Rohrleitung (11),
- wenigstens ein Leckagesensor (14.3) zur Erfassung einer Leckage an der Rohrleitung (11),
- wenigstens ein Isolationssensor (14.4) zur Prüfung der Isolation der Rohrleitung (11), wobei insbesondere
- durch die Inspektionseinheit (13) wenigstens eins der folgenden umfasst ist:
- Wenigstens eine Markierungseinheit (23) zur, insbesondere farblichen, Markierung einer Position an der Rohrleitung (11),
- Wenigstens eine Werkzeugeinheit (24) umfassend wenigstens ein Werkzeug (36).

8. Inspektionsvorrichtung (10) nach einem der vorhergehenden Ansprüche,
**dadurch gekennzeichnet,**
**dass** durch die Inspektionsvorrichtung (10) wenigstens eins der folgenden Sensorelemente (14) umfasst ist:
- Wenigstens ein, insbesondere kapazitiver, Abstandssensor (14.5), zur frühzeitigen Detektion einer Kollision der Inspektionsvorrichtung (10),
- Wenigstens ein Positionssensor (14.6) zur Bestimmung der Position der Inspektionsvorrichtung (10),
- Wenigstens ein Wegstreckensensor (14.7) zur Erfassung einer von der Inspektionsvorrichtung (10) auf der Rohrleitung (11) zurückgelegten Wegstrecke.

9. Inspektionsvorrichtung (10) nach einem der vorhergehenden Ansprüche,
**dadurch gekennzeichnet,**
**dass** die Inspektionseinheit (13) wenigstens einen Inspektionsarm (25) umfasst, wobei der Inspektionsarm (25) und das Trägerelement (20) über wenigstens eine Gelenkverbindung miteinander verbunden sind, sodass der Inspektionsarm (25) relativ zu dem Trägerelement (20) zumindest abschnittsweise verschwenkbar ist, und/oder sodass ein Abstand zwischen dem Inspektionsarm (25) und dem Trägerelement (20) zumindest abschnittsweise, insbesondere linear, veränderbar ist, wobei insbesondere wenigstens ein Inspektionsarm (25) einen Inspektionskopf (26) umfasst, wobei der Inspektionskopf (26) dazu ausgebildet ist eine Rohrleitung (11) zumindest abschnittsweise aufzunehmen und wobei an dem Inspektionskopf (26) wenigstens ein Sensorelement (14) der Inspektionseinheit (13) angeordnet ist.

10. Inspektionsvorrichtung (10) nach Anspruch 9,
**dadurch gekennzeichnet,**
**dass** wenigstens ein Inspektionsarm (25) wenigstens zwei Teilglieder (25.1) umfasst, wobei wenigstens zwei Teilglieder (25.1) des Inspektionsarms (25) über wenigstens eine Gelenkverbindung miteinander verbunden sind, sodass die Teilglieder (25.1) zumindest abschnittsweise zueinander verschwenkbar sind, wobei insbesondere wenigstens ein Teilglied (25.1) wenigstens eines Inspektionsarms (25) einen Einstellmechanismus (27) umfasst, wobei über den Einstellmechanismus (27) eine Länge des Teilglieds (25.1) zumindest abschnittsweise veränderbar ist, und/oder dass an wenigstens einem Inspektionsarm (25) wenigstens ein Gewichtselement (22) zur Stabilisierung einer Schwerpunktlage der Inspektionsvorrichtung (10) angeordnet ist.

11. Inspektionsvorrichtung (10) nach einem der vorhergehenden Ansprüche,
**dadurch gekennzeichnet,**
**dass** wenigstens eine Steuereinheit (28) zur zumindest teilweisen Steuerung der Inspektionsvorrichtung (10) umfasst ist.

12. Inspektionssystem (50) zur Inspektion wenigstens einer Rohrleitung (11), umfassend wenigstens eine Inspektionsvorrichtung (10) nach einem der vorhergehenden Ansprüche sowie wenigstens ein mobiles Gerät (51), insbesondere eine Fernsteuerung, wobei das mobile Gerät (51) und die Inspektionsvorrichtung (10) zumindest temporär in eine, insbesondere bidirektionale, Kommunikationsverbindung bringbar sind, sodass die Inspektionsvorrichtung (10) zumindest teilweise durch das mobile Gerät (51) steuerbar ist.

13. Verfahren (100) zur Inspektion wenigstens einer Rohrleitung (11) mit einer Inspektionsvorrichtung (10) nach einem der Ansprüche 1 bis 11, wobei die Inspektionsvorrichtung (10) auf wenigstens einer Rohrleitung (11) angeordnet ist, wobei wenigstens die folgenden Schritte, vorzugsweise in der angegebenen Reihenfolge, durchgeführt werden:
- Befahren (110) wenigstens eines Abschnitts der Rohrleitung (11) durch eine Basiseinheit (12) der Inspektionsvorrichtung (10),
- Inspizieren (120) wenigstens eines Abschnitts der Rohrleitung (11) durch eine Inspektionseinheit (13) der Inspektionsvorrichtung (10).

14. Computerprogrammprodukt umfassend Befehle, die bewirken, dass die Steuereinheit (28) der Inspektionsvorrichtung (10) nach Anspruch 11 und/oder das mobile Gerät (51) des Inspektionssystems (50) nach Anspruch 12 ein Verfahren (100) nach Anspruch 13 ausführt.

15. Computerlesbares Speichermedium, auf dem ein Computerprogrammprodukt nach Anspruch 14 gespeichert ist.

## Claims

1. Inspection device (10) for inspecting at least one pipeline (11), comprising a base unit (12) and an inspection unit (13),
wherein the inspection unit (13) comprises at least one sensor element (14) for inspecting the pipeline (11)
and wherein the base unit (12) comprises a drive unit (15),
the drive unit (15) further comprising at least one drive wheel (16) and at least one, in particular electric, drive (17),
wherein the drive (17) is operatively connected to the drive wheel (16) such that the drive wheel (16) can be driven by the drive (17)
and wherein the base unit (12) further comprises a support element (20)
and at least one guide wheel (19) for guiding the inspection device (10) along the pipeline (11),
wherein the inspection unit (13) is at least partially supported by the support element (20),
wherein the guide wheel (19) is arranged on the support element (20),
and wherein a rotational axis (R) of the drive wheel (16) is oriented at an angle to a rotational axis (R) of at least one guide wheel (19),
**characterized in that** at least one weight element (22) for stabilizing a center-of-gravity position of the inspection device (10) is arranged on the support element (20), wherein the at least one weight element (22) for stabilizing a center-of-gravity position of the inspection device (10) is movably mounted on the support element (20) such that a distance between the weight element (22) and the support element (20) is variable at least in sections.

2. Inspection device (10) according to claim 1,
**characterized in that**
the drive unit (15) and the support element (20) are connected to one another via at least one articulated joint, such that the drive unit (15) is pivotable relative to the support element (20) at least in certain sections and/or such that a distance between the drive unit (15) and the support element (20) is variable at least in certain sections, in particular linearly.

3. Inspection device (10) according to one of the preceding claims,
**characterized in that**
at least one guide wheel (19) and the support element (20) are connected to one another via at least one articulated joint, such that the guide wheel (19) is pivotable relative to the support element (20) at least in sections, and/or such that a distance between the guide wheel (19) and the support element (20) is variable at least in sections, in particular linearly, and/or
that at least one pair of guide wheels (19) is arranged on the support element (20), wherein in particular the pair of guide wheels (19) comprises a first guide wheel (19) and a second guide wheel (19), wherein the first guide wheel (19) and the second guide wheel (19) of the pair of guide wheels (19) are arranged at the same or substantially the same position with respect to a longitudinal extension (L) of the support element (20).

4. Inspection device (10) according to any one of the preceding claims,
**characterized in that**
a rotational axis (R) of at least one guide wheel (19) is oriented at an angle to a rotational axis (R) of at least one other guide wheel (19), wherein preferably the angle of inclination between the rotational axes (R) is between 30° and 170°, in particular between 45° and 150°, preferably between 60° and 130°.

5. Inspection device (10) according to any one of the preceding claims,
**characterized in that**
at least one weight element (22) is arranged on the support element (20) to stabilize a center-of-gravity position of the inspection device (10), wherein at least one weight element (22) for stabilizing a center-of-gravity position of the inspection device (10) is movably mounted on the support element (20) such that a distance between the weight element (22) and the support element (20) is linearly variable at least in sections.

6. Inspection device (10) according to one of the preceding claims,
**characterized in that**
the support element (20) comprises at least two sub-elements (20.1), wherein the sub-elements (20.1) are hinged together such that the sub-elements (20.1) are pivotable relative to one another at least in sections.

7. Inspection device (10) according to one of the preceding claims,
**characterized in that**
the inspection unit (13) comprises at least one of the following sensor elements (14):
- at least one image sensor (14.1) for capturing images of the pipeline (11),
- at least one temperature sensor (14.2) for detecting the temperature of the pipeline (11),
- at least one leak sensor (14.3) for detecting a leak in the pipeline (11),
- at least one insulation sensor (14.4) for testing the insulation of the pipeline (11),
wherein, in particular, the inspection unit (13) further comprises at least one of the following:
- at least one marking unit (23) for marking a position on the pipeline (11), in particular with color,
- at least one tool unit (24) comprising at least one tool (36).

8. Inspection device (10) according to one of the preceding claims,
**characterized in that**
the inspection device (10) comprises at least one of the following sensor elements (14):
- at least one, in particular capacitive, distance sensor (14.5) for early detection of a collision of the inspection device (10),
- at least one position sensor (14.6) for determining the position of the inspection device (10),
- at least one odometric sensor (14.7) for detecting a distance traveled by the inspection device (10) along the pipeline (11).

9. Inspection device (10) according to one of the preceding claims,
**characterized in that**
the inspection unit (13) comprises at least one inspection arm (25), wherein the inspection arm (25) and the support element (20) are connected to one another via at least one articulated joint, such that the inspection arm (25) is pivotable relative to the support element (20) at least in sections, and/or such that a distance between the inspection arm (25) and the support element (20) is variable at least in sections, in particular linearly, wherein, in particular, at least one inspection arm (25) comprises an inspection head (26), wherein the inspection head (26) is designed to accommodate a pipeline (11) at least in sections, and wherein at least one sensor element (14) of the inspection unit (13) is arranged on the inspection head (26).

10. Inspection device (10) according to claim 9,
**characterized in that**
at least one inspection arm (25) comprises at least two sub-elements (25.1), wherein at least two sub-elements (25.1) of the inspection arm (25) are connected to one another via at least one articulated joint, such that the sub-elements (25.1) can be pivoted relative to one another at least in sections, wherein, in particular, at least one sub-element (25.1) of at least one inspection arm (25) comprises an adjustment mechanism (27), wherein a length of the sub-element (25.1) can be varied at least in sections via the adjustment mechanism (27), and/or that at least one weight element (22) is arranged on at least one inspection arm (25) to stabilize a center-of-gravity position of the inspection device (10).

11. Inspection device (10) according to one of the preceding claims,
**characterized in that**
at least one control unit (28) is provided for at least partially controlling the inspection device (10).

12. Inspection system (50) for inspecting at least one pipeline (11), comprising at least one inspection device (10) according to any one of the preceding claims, as well as at least one mobile device (51), in particular a remote control, wherein the mobile device (51) and the inspection device (10) can be brought into at least a temporary, in particular bidirectional, communication connection, such that the inspection device (10) can be at least partially controlled by the mobile device (51).

13. Method (100) for inspecting at least one pipeline (11) with an inspection device (10) according to any one of claims 1 to 11, wherein the inspection device (10) is arranged on at least one pipeline (11), wherein at least the following steps are performed, preferably in the order specified:
- traversing (110) at least one section of the pipeline (11) by a base unit (12) of the inspection device (10),
- inspecting (120) at least one section of the pipeline (11) by an inspection unit (13) of the inspection device (10).

14. Computer program product comprising instructions that cause the control unit (28) of the inspection device (10) according to claim 11 and/or the mobile device (51) of the inspection system (50) according to claim 12 to perform a method (100) according to claim 13.

15. Computer-readable storage medium on which the computer program product according to claim 14 is stored.

## Revendications

1. Dispositif d'inspection (10) destiné à inspecter au moins une conduite (11), comprenant une unité de base (12) ainsi qu'une unité d'inspection (13),
l'unité d'inspection (13) comprenant au moins un élément capteur (14) destiné à inspecter la conduite (11)
et l'unité de base (12) comprenant une unité d'entraînement (15),
l'unité d'entraînement (15) comprenant en outre au moins une roue d'entraînement (16) ainsi qu'au moins un entraînement (17), notamment électrique,
l'entraînement (17) étant en liaison fonctionnelle avec la roue d'entraînement (16) de telle sorte que la roue d'entraînement (16) puisse être entraînée par l'entraînement (17)
et l'unité de base (12) comprenant en outre un élément de support (20)
ainsi qu'au moins une roue de guidage (19) pour guider le dispositif d'inspection (10) le long de la conduite (11),
l'unité d'inspection (13) étant supportée au moins en partie par l'élément de support (20),
la roue de guidage (19) étant disposée sur l'élément de support (20),
et dans lequel un axe de rotation (R) de la roue d'entraînement (16) est orienté de manière inclinée par rapport à un axe de rotation (R) d'au moins une roue de guidage (19),
**caractérisé en ce qu'**au moins une masselotte (22) destinée à stabiliser la position du centre de gravité du dispositif d'inspection (10) est disposée sur l'élément de support (20), ladite au moins une masselotte (22) destinée à stabiliser la position du centre de gravité du dispositif d'inspection (10) étant montée de manière mobile sur l'élément de support (20), de sorte qu'une distance entre la masselotte (22) et l'élément de support (20) est variable au moins par sections.

2. Dispositif d'inspection (10) selon la revendication 1,
**caractérisé en ce que**
l'unité d'entraînement (15) et l'élément de support (20) sont reliés l'un à l'autre par au moins une articulation, de sorte que l'unité d'entraînement (15) peut pivoter par rapport à l'élément de support (20) au moins par sections et/ou de sorte qu'une distance entre l'unité d'entraînement (15) et l'élément de support (20) est variable au moins par sections, en particulier de manière linéaire.

3. Dispositif d'inspection (10) selon l'une des revendications précédentes,
**caractérisé en ce que**
au moins une roue de guidage (19) et l'élément de support (20) sont reliés entre eux par au moins une articulation, de sorte que la roue de guidage (19) peut pivoter par rapport à l'élément de support (20) au moins par sections, et/ou de telle sorte qu'une distance entre la roue de guidage (19) et l'élément de support (20) soit variable au moins par sections, en particulier de manière linéaire, et/ou
**en ce qu'**au moins une paire de roues de guidage (19) est disposée sur l'élément de support (20), la paire de roues de guidage (19) comprenant notamment une première roue de guidage (19) et une deuxième roue de guidage (19), la première roue de guidage (19) et la deuxième roue de guidage (19) de la paire de roues de guidage (19) étant disposées dans une position identique ou sensiblement identique par rapport à une extension longitudinale (L) de l'élément de support (20).

4. Dispositif d'inspection (10) selon l'une des revendications précédentes,
**caractérisé en ce qu'**
un axe de rotation (R) d'au moins une roue de guidage (19) est orienté de manière inclinée par rapport à un axe de rotation (R) d'au moins une autre roue de guidage (19), de préférence l'angle d'inclinaison entre les axes de rotation (R) étant compris entre 30° et 170°, en particulier entre 45° et 150°, de préférence entre 60° et 130°.

5. Dispositif d'inspection (10) selon l'une des revendications précédentes,
**caractérisé en ce que**
au moins une masselotte (22) est disposée sur l'élément de support (20) pour stabiliser la position du centre de gravité du dispositif d'inspection (10), au moins une masselotte (22) destinée à stabiliser la position du centre de gravité du dispositif d'inspection (10) étant montée de manière mobile sur l'élément de support (20), de sorte qu'une distance entre la masselotte (22) et l'élément de support (20) est variable de manière linéaire au moins par sections.

6. Dispositif d'inspection (10) selon l'une des revendications précédentes,
**caractérisé en ce que**
l'élément de support (20) comprend au moins deux éléments partiels (20.1), lesdits éléments partiels (20.1) étant reliés entre eux de manière articulée de telle sorte que les éléments partiels (20.1) puissent pivoter les uns par rapport aux autres au moins par sections.

7. Dispositif d'inspection (10) selon l'une des revendications précédentes,
**caractérisé en ce que**
l'unité d'inspection (13) comprend au moins l'un des éléments capteurs (14) suivants :
- au moins un capteur d'images (14.1) pour la détection d'images de la conduite (11),
- au moins un capteur de température (14.2) pour détecter la température de la conduite (11),
- au moins un capteur de fuite (14.3) pour détecter une fuite sur la conduite (11),
- au moins un capteur d'isolation (14.4) pour contrôler l'isolation de la conduite (11),
en particulier, l'unité d'inspection (13) comprenant en outre au moins l'un des éléments suivants :
- au moins une unité de marquage (23) destinée à marquer, notamment à l'aide de couleur, une position sur la conduite (11),
- au moins une unité d'outillage (24) comprenant au moins un outil (36).

8. Dispositif d'inspection (10) selon l'une des revendications précédentes,
**caractérisé en ce que**
le dispositif d'inspection (10) comprend au moins l'un des éléments capteurs (14) suivants :
- au moins un capteur de distance (14.5), notamment capacitif, destiné à la détection précoce d'une collision du dispositif d'inspection (10),
- au moins un capteur de position (14.6) destiné à déterminer la position du dispositif d'inspection (10),
- au moins un capteur de distance parcourue (14.7) destiné à enregistrer une distance parcourue par le dispositif d'inspection (10) sur la conduite (11).

9. Dispositif d'inspection (10) selon l'une des revendications précédentes,
**caractérisé en ce que**
l'unité d'inspection (13) comprend au moins un bras d'inspection (25), le bras d'inspection (25) et l'élément de support (20) étant reliés l'un à l'autre par au moins une articulation, de sorte que le bras d'inspection (25) peut pivoter par rapport à l'élément de support (20) au moins par sections, et/ou de sorte qu'une distance entre le bras d'inspection (25) et l'élément de support (20) peut être modifiée au moins par sections, en particulier de manière linéaire, au moins un bras d'inspection (25) comprenant notamment une tête d'inspection (26), la tête d'inspection (26) étant conçue pour recevoir une conduite (11) au moins par sections, et au moins un élément capteur (14) de l'unité d'inspection (13) étant disposé sur la tête d'inspection (26).

10. Dispositif d'inspection (10) selon la revendication 9,
**caractérisé en ce qu'**
au moins un bras d'inspection (25) comprend au moins deux éléments partiels (25.1), au moins deux éléments partiels (25.1) du bras d'inspection (25) étant reliés entre eux par au moins une articulation, de sorte que les éléments partiels (25.1) peuvent pivoter les uns par rapport aux autres au moins par sections, au moins un élément partiel (25.1) d'au moins un bras d'inspection (25) comprenant notamment un mécanisme de réglage (27), la longueur de l'élément partiel (25.1) pouvant être modifiée au moins par sections via le mécanisme de réglage (27), et/ou qu'au moins une masselotte (22) est disposée sur au moins un bras d'inspection (25) afin de stabiliser la position du centre de gravité du dispositif d'inspection (10).

11. Dispositif d'inspection (10) selon l'une des revendications précédentes,
**caractérisé en ce qu'**
il comprend au moins une unité de commande (28) destinée à commander au moins partiellement le dispositif d'inspection (10).

12. Système d'inspection (50) destiné à l'inspection d'au moins une conduite (11), comprenant au moins un dispositif d'inspection (10) selon l'une des revendications précédentes ainsi qu'au moins un appareil mobile (51), en particulier une télécommande, l'appareil mobile (51) et le dispositif d'inspection (10) pouvant être mis, au moins temporairement, en liaison de communication, en particulier bidirectionnelle, de sorte que le dispositif d'inspection (10) puisse être commandé au moins en partie par l'appareil mobile (51).

13. Procédé (100) d'inspection d'au moins une conduite (11) à l'aide d'un dispositif d'inspection (10) selon l'une des revendications 1 à 11, le dispositif d'inspection (10) étant disposé sur au moins une conduite (11), dans lequel au moins les étapes suivantes sont effectuées, de préférence dans l'ordre indiqué :
- parcours (110) d'au moins une section de la conduite (11) par une unité de base (12) du dispositif d'inspection (10),
- inspection (120) d'au moins une section de la conduite (11) par une unité d'inspection (13) du dispositif d'inspection (10).

14. Produit-programme d'ordinateur comprenant des instructions qui font en sorte que l'unité de commande (28) du dispositif d'inspection (10) selon la revendication 11 et/ou l'appareil mobile (51) du système d'inspection (50) selon la revendication 12 exécute un procédé (100) selon la revendication 13.

15. Support de stockage lisible par ordinateur sur lequel est stocké le produit-programme d'ordinateur selon la revendication 14.
